# EUROPEAN PATENT SPECIFICATION

(11) **EP 4 352 883 B1**
(45) Date of publication and mention of the grant of the patent: **25.02.2026**
(21) Application number: 21762305.7
(22) Date of filing: 06.08.2021
(51) Int. Cl.: H04B 7/06

(54) **SPATIAL AVERAGING OF TRANSMISSION POWER TO REDUCE POWER CUTBACKS**
RÄUMLICHE MITTELWERTBILDUNG DER SENDELEISTUNG ZUR REDUZIERUNG VON LEISTUNGSRÜCKBRÜCHEN
MOYENNAGE SPATIAL DE PUISSANCE DE TRANSMISSION POUR LIMITER DES RÉDUCTIONS DE PUISSANCE

(43) Date of publication of application: 17.04.2024
(73) Proprietor: Google LLC, Mountain View, CA 94043 (US)
(72) Inventor: BLACK, Gregory Redmond, Mountain View, California 94043 (US); TROCKE, Robert S., Mountain View, California 94043 (US); ZHAO, Hongming, Mountain View, California 94043 (US)
(74) Representative: Marks & Clerk GST
(86) International application number: PCT/US2021/045098
(87) International publication number: WO 2023/014379

(56) References cited:
- WO-A1-2021/066855
- US-A1- 2013 309 982
- US-A1- 2015 094 003
- US-A1- 2016 174 168
- US-A1- 2020 374 818

## Description

### BACKGROUND

Some computing devices enable users to communicate with other devices and access resources through a wireless communication network. Such a device may establish a connection to a base station by transmitting and receiving electromagnetic (EM) signals through a wireless communication network using one or more antennas of the device. A device may transmit EM signals at a transmission power within a radio-frequency (RF) range to support services including, for instance, phone calls between devices and access to broadband cellular networks. In some situations, the transmission power of the device may be increased to a maximum power to enable performance of these services. For example, a device that is in a remote location, far from a base station, may need to transmit EM signals at a maximum power to perform a phone call. This maximum power, however, may be correlated with an emission of radiation that exceeds restrictions set by mandatory RF exposure regulations. To prevent transmission of EM signals in excess of these restrictions, many devices reduce the maximum power associated with one or more antennas, a technique referred to as "power cutbacks." These power cutbacks may reduce performance of a device, preventing a user from, for instance, placing a successful phone call or accessing resources.

WO2021066855A1 describes various aspects of antenna selection with dynamic thresholds for user devices.

US2020374818A1 describes beam selection which includes selecting a beam from a plurality of beams for uplink transmission during a particular time interval, and transmitting at least one uplink signal using the selected beam during the particular time interval. The selecting based on a transmission power and a radio frequency (RF) exposure for each of the plurality of beams.

### SUMMARY

This document describes techniques and devices for spatial averaging of transmission power to reduce power cutbacks. The techniques of spatial averaging may enable separate determinations of transmit power capacities for each antenna of a computing device if each antenna is spaced apart from a neighboring antenna by a minimum distance. The transmit power capacities may be based on transmit power limits (e.g., regulatory or performance limits) and, in general, may be determined independently from, or with reduced dependence on, a transmit power of another antenna. These separate determinations may allow for spatial averaging of transmission power of a device to improve antenna-switching decisions and reduce a dependence upon power cutbacks. When power cutbacks are unavoidable, the separate determinations may additionally improve antenna-switching decisions at cutback powers to optimize the transmission power of the device.

The invention is defined in the claims and includes
a method according to claim 1 and a computing device according to claim 15. Further aspects described below include a method, system, apparatus, and means of spatial averaging of transmission power to reduce power cutbacks. The method includes determining a first transmit power capacity based on a first transmit power limit for a first antenna of a computing device. The computing device may be configured to transmit signals at a first transmit power, limited by the first transmit power limit, using the first antenna. The method may also include determining a second transmit power capacity based on a second transmit power limit for a second antenna of the computing device. The computing device may be further configured to transmit signals at a second transmit power, limited by the second transmit power limit, using the second antenna. The second transmit power capacity may be determined using the second transmit power and with less dependence on the first transmit power when compared to dependence on the second transmit power. The method may additionally include comparing the first transmit power capacity and the second transmit power capacity to determine which of the first and second transmit power capacities has a lesser or greater transmit power capacity. If the first transmit power capacity is the lesser transmit power capacity or if the second transmit power capacity is the greater transmit power capacity, a current or planned transmission may switch from the first antenna to the second antenna.

### BRIEF DESCRIPTION OF DRAWINGS

Apparatuses and techniques for spatial averaging of transmission power to reduce power cutbacks are described with reference to the following diagrams.

The same numbers are used throughout the drawings to reference like features and components:
FIG. 1 illustrates an example sequence of the techniques of spatial averaging with time progressing from left to right;
FIG. 2 illustrates an example implementation of the techniques of spatial averaging as part of the computing device;
FIG. 3-1 illustrates example environments in which an RSI, corresponding to an RF regulatory restriction, may be determined by an RSI logic of a computing device;
FIG. 3-2 illustrates an example environment in which an MTPL controller may be used to determine separate MTPLs for each antenna of a computing device;
FIG. 4 illustrates example plots that depict time-averaging techniques used to reduce power cutbacks;
FIG. 5 illustrates the spatial-averaging module as part of the computing device;
FIGs. 6-1 and 6-2 illustrate an example logic for, and example plots of, power cutbacks for an antenna;
FIGs. 7-1 and 7-2 illustrate an example logic for, and example plots of, antenna switching;
FIGs. 8-1 and 8-2 illustrate an example logic for, and example plots of, antenna switching at cutback powers;
FIG. 9 illustrates a combination of the example logics to summarize the techniques of spatial averaging;
FIG. 10 illustrates an example computing device with multiple antennas;
FIG. 11 illustrates example plots that depict techniques to prevent power overshoots;
FIG. 12 illustrates an example method for spatial averaging of transmission power to reduce power cutbacks; and
FIG. 13 illustrates an example computing system embodying, or in which techniques can be implemented that enable use of, the techniques of spatial averaging of transmission power to reduce power cutbacks.

### DETAILED DESCRIPTION

### Overview

Some computing devices enable users to communicate with other devices and access resources through a wireless communication network. Such a device may establish a connection with a base station by transmitting and receiving EM signals through a wireless communication network using one or more antennas of the device. A device may transmit EM signals at a transmit power within an RF range to support services including, for instance, phone calls between devices and access to broadband cellular networks. In some situations, the transmission power of the device may be increased to a maximum power to enable performance of these services. For example, a device that is in a remote location, far from a base station, may need to transmit EM signals at a maximum power to perform a phone call. This maximum power, however, may be correlated with an emission of radiation that exceeds restrictions set by mandatory RF exposure regulations.

When a user is exposed to RF radiation from, for example, a portable device designed to be used within 20 centimeters (cm) of the body of the user, the radiation exposure may be qualified by a specific absorption rate (SAR) associated with an RF range (e.g., 100 kilohertz (kHz) to 6 gigahertz (GHz)) and/or a power density (PD) associated with microwave frequencies (e.g., 6 GHz to 300 GHz). The radiation exposure may be proportionally related to a transmit power of an antenna of a device, which is limited by a transmit power limit (e.g., associated with a transmit power capacity). Therefore, as the transmit power increases to support a wireless connection, the radiation exposure increases proportionally.

To keep users safe, many devices must comply with RF exposure regulations including restrictions on transmit powers of antennas. These RF exposure regulations may set standards for safe transmit power limits of antennas and vary depending on, for example, hand or body determination, grip detection, head detection, wireless charging status, country region, Wi-Fi^{®} hotspot status, Wi-Fi^{®} status, debugging status, and so forth. For example, if a user is located far away from their device, the transmit power limit may be increased to allow for a maximum transmit power. If a user is holding their device close to their head, however, the transmit power limit (dictated by RF exposure regulations) may be reduced to restrict an antenna to a lower transmit power that enables the user to operate the device safely. These reductions in transmit powers are referred to as "power cutbacks." Power cutbacks may reduce performance of a device, preventing a user from, for instance, placing a successful phone call or accessing resources.

Some devices reduce power cutbacks by toggling the transmit power of an antenna over a duration of time, a technique referred to as "time averaging." When utilizing time-averaging techniques, a time-averaged transmit power must comply with a time-averaged transmit power limit. By averaging the transmit power over a duration of time, a device may be permitted to send EM signals at a maximum transmit power for a short amount of time (e.g., to perform a short phone call in a remote location) as long as the time-averaged transmit power complies with the time-averaged transmit power limit. Time-averaging techniques, however, may not allow for transmission at a maximum transmit power for a prolonged period of time.

Other devices reduce power cutbacks by switching antennas used to transmit EM signals at a current or planned time, a technique referred to as "antenna switching." When utilizing antenna-switching techniques, devices may switch antennas based on predetermined information (e.g., manufacturing specifications), which may not include real-time information that can improve an antenna-switching decision. For example, a device may switch antennas based on a preset order of preferred antennas. Furthermore, transmit power capacities (e.g., an ability of an antenna to transmit signals) may be determined, in part, based on a transmit power of two or more antennas of the device. This means that a transmit power capacity of a given antenna may be determined with full dependence on a transmit power of one or more additional antennas. This may make it more difficult to individually assess real-time performance of an antenna. Antenna-switching decisions are often based on transmit power capacities that indicate the ability of an antenna to transmit signals. Some devices may make an antenna-switching decision without separately calculating a transmit power capacity for each antenna, which can prevent the device from optimizing transmission power. As a result, devices may resort to power cutbacks in lieu of a more-informed decision regarding antenna switching.

To address these challenges, this disclosure describes a method of spatial averaging of transmission power to reduce power cutbacks. The techniques described herein improve upon time-averaging and antenna-switching techniques by separately determining transmit power capacities for each antenna of a device to better determine which antenna may transmit the most power at any given time. The transmit power capacities may be limited by respective transmit power limits (e.g., RF exposure regulations) and/or an ability of each antenna to receive base signals from a base station. In this disclosure, a transmit power capacity of an antenna may be determined independently from, or with reduced dependence on, a transmit power of another antenna if the two antennas are separated substantially (e.g., by a minimum distance) on the device. These independent determinations of transmit power capacities may improve antenna-switching decisions to reduce power cutbacks. When incorporating time-averaging techniques into antenna switching, the transmit power limit for each antenna may be averaged over a duration of time to determine a respective maximum transmit power level (MTPL). Therefore, the transmit power capacity of an antenna may be based on a respective MTPL, which limits an average transmit power of that antenna.

### Example Environment

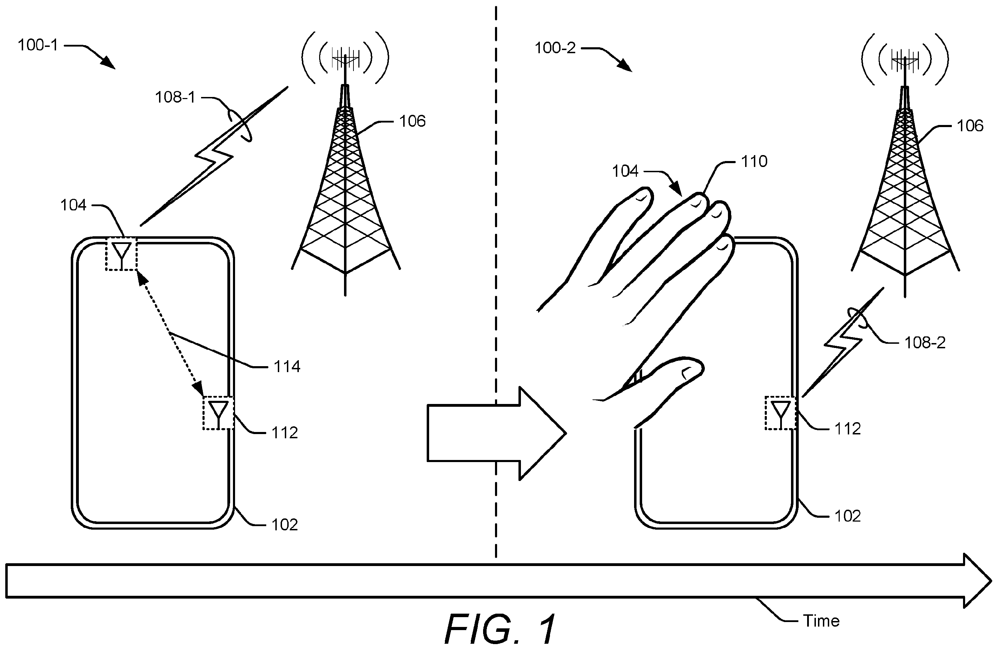

FIG. 1 illustrates an example sequence 100 of the techniques of spatial averaging with time progressing from left to right. At example sequence 100-1, a computing device 102 is using a first antenna 104 to transmit signals to a base station 106 through a wireless connection 108-1. In this example, the computing device 102 is transmitting signals at a maximum transmit power while in a remote location to improve performance of wireless communications with another device. The maximum transmit power may be permitted at this time due to a first transmit power limit (e.g., an RF regulatory limit). A first transmit power capacity of the first antenna 104 may be based on the first transmit power limit.

At a later time in example sequence 100-2, a user 110 places their hand over the first antenna 104 and in close contact with the computing device 102. This close contact may be associated with greater RF restrictions to protect the user 110 from radiation exposure. These greater RF restrictions may require a reduction in the first transmit power limit to restrict the maximum transmit power. Therefore, the computing device 102 may not be able to continue transmitting signals at the maximum transmit power using the first antenna 104 and may need to transmit at a cutback power. Instead of reducing the maximum transmit power, the spatial averaging techniques may enable the computing device 102 to: (1) separately determine a second transmit power capacity of a second antenna 112, (2) determine that the second antenna 112 is able to transmit signals at a higher transmit power than a cutback power of the first antenna 104, and (3) switch to transmitting signals using the second antenna 112 at a current or planned time to maintain performance of the wireless communications through a wireless connection 108-2.

The separate determination of the second transmit power capacity of the second antenna 112 may be performed when the first antenna 104 and the second antenna 112 are substantially separated on the computing device 102 by at least a minimum distance (e.g., an antenna separation 114). When this condition is met, the second transmit power capacity of the second antenna 112 may be determined based on the transmit power of the second antenna 112, which is limited by a second transmit power limit. This second transmit power capacity may represent an ability of the second antenna 112 to transmit signals at a given time. Furthermore, the separate determination of the second transmit power capacity may be performed without dependence on a transmit power of the first antenna 104.

If, however, the first antenna 104 and the second antenna 112 are spaced apart by a distance less than the antenna separation 114, then the determination of the second transmit power capacity may need to include aspects of the transmit power from the first antenna 104. In this case, the determination of the second transmit power capacity may be performed with reduced dependence (based on the distance between the antennas) on the transmit power from the first antenna 104. For some devices, these two antennas may be positioned close enough that the determination of each respective transmit power capacity is performed with full dependence on the transmit power of both antennas. This disclosure, however, will focus on conditions in which transmit power capacities may be determined independently from, or with reduced dependence on, a transmit power of another antenna.

### Example Computing Device

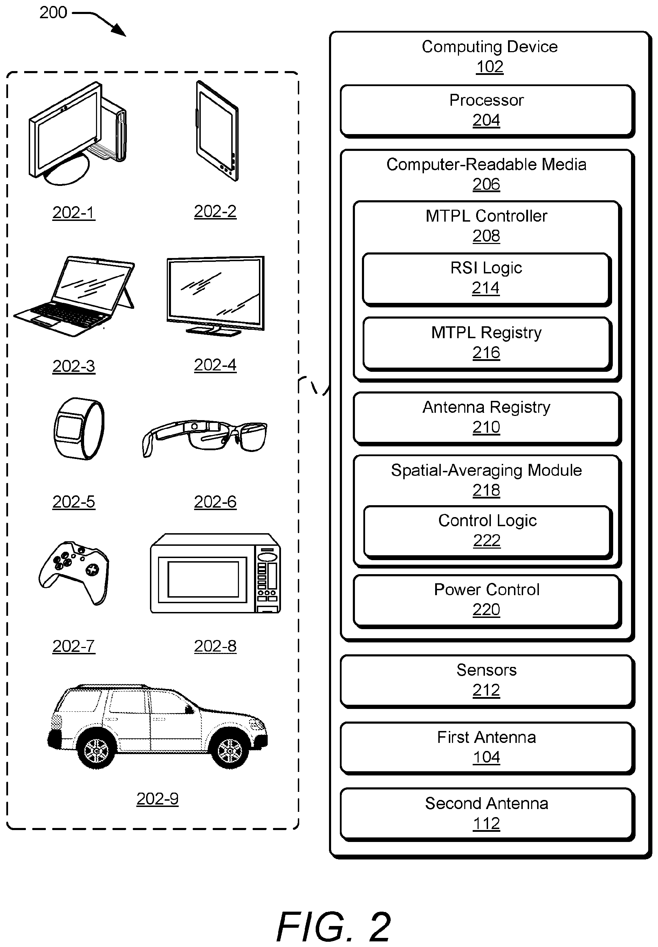

While the example computing device 102 described in this publication is a mobile phone, other types of computing devices may also support the techniques described herein. FIG. 2 illustrates an example implementation 200 of the techniques of spatial averaging as part of the computing device 102. The computing device 102 is illustrated with various non-limiting example devices, including a desktop computer 202-1, a tablet 202-2, a laptop 202-3, a television 202-4, a computing watch 202-5, computing glasses 202-6, a gaming system 202-7, a microwave 202-8, and a vehicle 202-9. Other devices may also be used, including a home-service device, a smart speaker, a smart thermostat, a security camera, a baby monitor, a Wi-Fi^{®} router, a drone, a trackpad, a drawing pad, a netbook, an e-reader, a home-automation and control system, a wall display, a virtual-reality headset, another home appliance, and so forth. The computing device 102 may be wearable, non-wearable but mobile, or relatively immobile (e.g., desktops and appliances). The computing device 102 may also be rigid, flexible, or semi-flexible.

The computing device 102 may include one or more processors 204 and one or more computer-readable medium (CRM) 206. Applications and/or an operating system (not shown) embodied as computer-readable instructions on the CRM 206 may be executed by the processor 204 and provide some of the functionalities described herein. The CRM 206 may include an MTPL controller 208 that receives inputs from an antenna registry 210, one or more sensors 212, applications (not shown), and network connections (not shown) to enable separate determinations of transmit power capacities for each antenna (e.g., the first antenna 104 and the second antenna 112) of the computing device 102. The MTPL controller 208 may include an RF SAR index (RSI) logic 214 that provides an RSI as input to an MTPL registry 216. The MTPL registry 216 may utilize the RSI and inputs from the antenna registry 210 (e.g., antenna characteristics as manufactured) to enable the MTPL controller 208 to separately determine an MTPL for each antenna.

The CRM 206 also includes a spatial-averaging module 218 that utilizes, in part, outputs from the MTPL controller 208 and a power control 220 to separately determine transmit power capacities for each antenna. The spatial-averaging module 218 may additionally determine the transmit power and/or average transmit power of each antenna of the computing device 102 to enable these separate determinations and improve antenna-switching decisions. The power control 220 may include a power-control level that is recommended for a given cellular network. For example, if a user is near a base station, a lower power-control level may be recommended for a cellular network. Whereas if the user is far from a base station (e.g., in a remote area), a higher power-control level may be recommended for the cellular network.

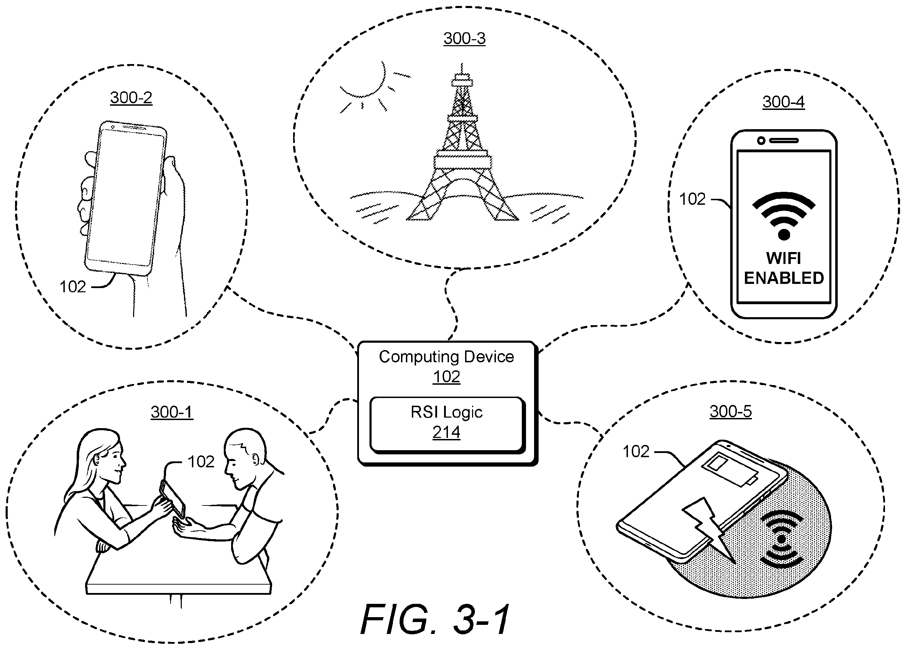

In an example, the spatial-averaging module 218 independently determines, using inputs, the transmit power capacities of the first antenna 104 and the second antenna 112. Based on these transmit power capacities, the computing device 102 makes an informed decision to switch antennas, used to transmit signals at a current or planned time, from the first antenna 104 to the second antenna 112. A control logic 222 of the spatial-averaging module 218 determines triggers needed to perform the antenna switching. In this example, the control logic 222 determines that a first trigger needs to be sent to the first antenna 104 (e.g., using the processor 204) to instruct the first antenna 104 to refrain from transmitting signals. The control logic 222 also determines that a second trigger needs to be sent to the second antenna 112 (e.g., using the processor 204) to instruct the second antenna 112 to begin transmitting signals at a current or planned time. These transmitted signals may be limited by a transmit power limit, which is further described with respect to FIG. 3-1.

### Determining Transmit Power Limits

FIG. 3-1 illustrates example environments 300-1 to 300-5 in which an RSI, corresponding to an RF regulatory restriction, may be determined by an RSI logic 214 of a computing device 102. In the depicted environments 300-1 to 300-5, the computing device 102 may use one or more sensors 212, applications, and/or network connections to determine inputs to the RSI logic 214 that enable determination of one or more RSI values used to regulate transmission from antennas.

In example environment 300-1, a motion sensor detects that a user is moving the computing device 102 towards another user. Each user is in close contact with the computing device 102, similar to example sequence 100-2. Information gathered by the motion sensor may be used as input to the RSI logic 214 to determine an appropriate RSI for this situation. The motion sensor may include an accelerometer, gravity sensor, gyroscope, linear acceleration sensor, rotation vector sensor, optical sensors, pressure sensors, relative humidity sensors, temperature sensors, proximity sensors, and so forth.

The presence of a user may also be determined using a grip sensor as depicted in example environment 300-2. In this example environment, a user is gripping the computing device 102 with their hand, which is detected by the grip sensor. Information gathered by the grip sensor (e.g., user presence) may be used as input to the RSI logic 214. While not depicted, the computing device 102 may also determine a user presence near one or more antennas using a sensor (e.g., an optical sensor, an ultrasonic sensor, a proximity sensor) and/or by detecting use of an earpiece. For example, if the user is making a phone call, then the computing device 102 may determine that the earpiece is in an active state.

The computing device 102 may also receive input regarding a country code associated with a current location of the device as depicted in example environment 300-3. The location of the computing device 102 may be used as input to the RSI logic 214 to comply with regulations of specific countries. For example, limitations on transmission power may be greater in France than in the United States of America.

In example environment 300-4, Wi-Fi^{®} is enabled on a computing device 102, which may influence an RSI determined by the RSI logic 214. Similarly, when a computing device 102 is being charged by a wireless charger, as depicted in example environment 300-5, an RSI value may be determined based on this charging state. Though not depicted, the RF restrictions, corresponding to RSI values, for any antenna may additionally change if the computing device 102 is debugging, a Wi-Fi^{®} hotspot is enabled, and so forth. These RSI values may be used as inputs to the MTPL registry 216 of the MTPL controller 208 to enable determination of separate MTPLs for each antenna of the computing device 102.

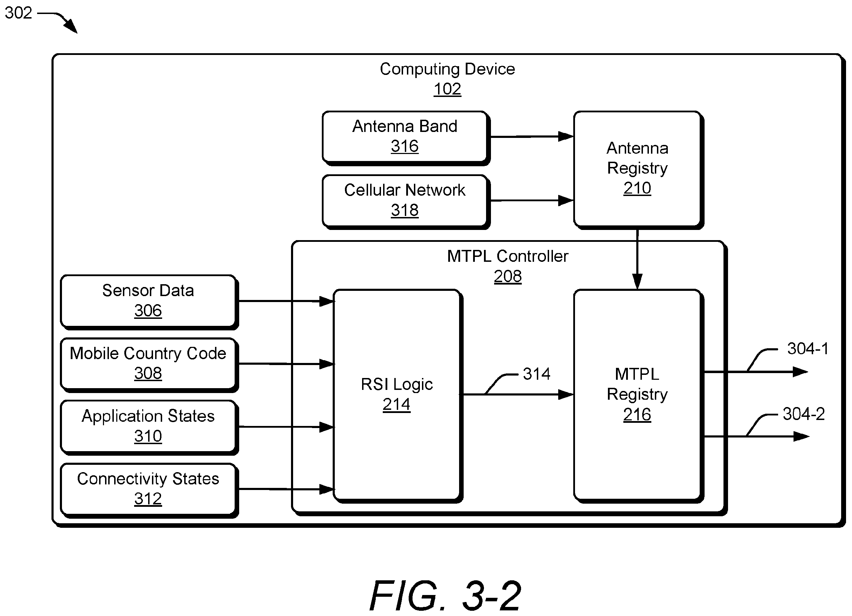

FIG. 3-2 illustrates an example environment 302 in which an MTPL controller 208 may be used to determine separate MTPLs 304 for each antenna of a computing device 102. These separately determined MTPLs 304 may enable the spatial-averaging module 218 to separately determine transmit power capacities for each antenna of the computing device 102. In example environment 302, the inputs to the RSI logic 214 may generally include sensor data 306 from the one or more sensors 212, a mobile country code 308, application states 310, and connectivity states 312. The RSI logic 214 may receive these inputs (as described with reference to example environments 300) and determine one or more RSIs 314 as input to the MTPL registry 216. An RSI 314 may include a numerical value (e.g., 0-11), an identifier, instructions, and so forth associated with RF regulations. For example, an RSI value of 11 may indicate a highest level of restrictions (e.g., requiring a greatest amount of power cutbacks) on signal transmission, whereas an RSI value of 0 may indicate a lowest level of restrictions (e.g., enabling maximum transmit powers). The RSI 314 may be an index used, in part, to select MTPL values for each antenna from the MTPL registry 216.

To separately determine MTPLs 304 for each antenna, the MTPL registry 216 receives both an RSI 314 and one or more inputs from the antenna registry 210. The antenna registry 210 may include information regarding an antenna band 316 and a cellular network(s) 318 associated with each antenna. The antenna band 316 may refer to a portion of the EM spectrum in which an antenna primarily transmits EM signals. For example, a low band may refer to transmit frequencies of 600-960 MHz, whereas an ultra-high band may refer to transmit frequencies of 3.4-3.6 GHz. Each antenna may include one or more bands. The cellular network 318 may include specifications of long-term evolution (LTE), global system for mobile communications (GSM), code-division multiple access (CDMA), and so forth, compatibility.

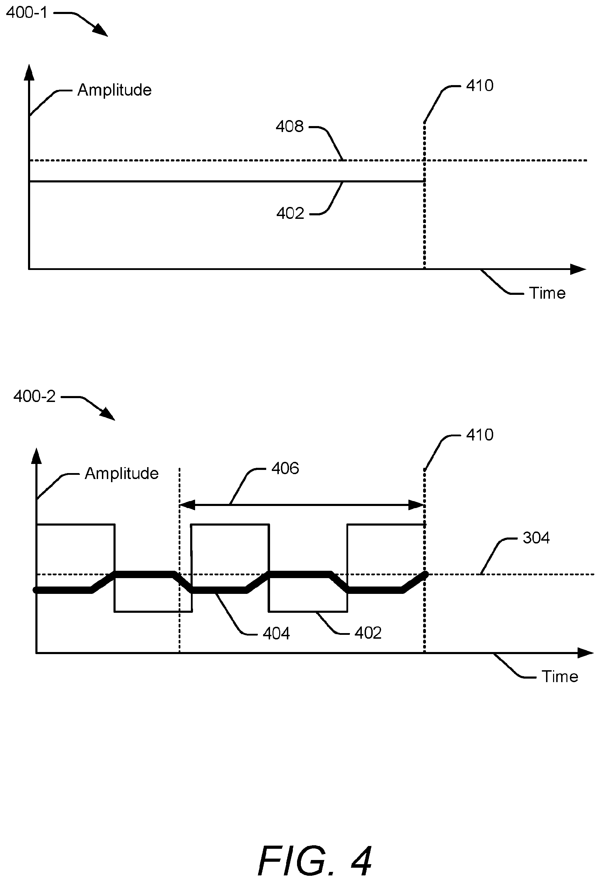

As depicted in the example environment 302, the MTPL controller 208 may use the MTPL registry 216 as a look-up table to determine a first MTPL 304-1 of the first antenna 104 and a second MTPL 304-2 of the second antenna 112 based on inputs from the RSI logic 214 and the antenna registry 210. The first MTPL 304-1 and the second MTPL 304-2 may change over time based on changes in one or more RSIs 314. Though not depicted, the MTPL controller 208 may alternatively be used to generate transmit power limits (e.g., instantaneous limits that are not averaged over a duration of time) for each antenna when time-averaging techniques are not used by the computing device 102. While this disclosure will focus on time-averaging techniques that utilize MTPLs 304, the techniques of spatial averaging described herein may also be performed using transmit power limits in the absence of time-averaging techniques. Time-averaging techniques are further described with respect to FIG. 4-1.

### Example Time-Averaging Techniques

FIG. 4 illustrates example plots 400 that depict time-averaging techniques used to reduce power cutbacks. Example plot 400-1 depicts the transmission of signals at a transmit power 402, that is not averaged over time, from an antenna. In comparison, example plot 400-2 depicts the transmission of signals at an average transmit power 404, where the transmit power 402 is averaged over a duration of time 406. Accordingly, time-averaging techniques are depicted in example plot 400-2 but are not depicted in example plot 400-1 for comparison purposes. While this disclosure will focus on spatial-averaging techniques that include time averaging, the techniques of spatial averaging may also be applied in the absence of time averaging (e.g., as described with reference to example plot 400-1).

Example plot 400-1 depicts an antenna transmitting signals at a transmit power 402, which is limited by a transmit power limit 408. In this example, the amplitude of the transmit power 402 may not exceed the amplitude of the transmit power limit 408 at any given time (e.g., a current time 410). In an example, the first antenna 104 may transmit signals at a first transmit power 402-1 that is limited by a first transmit power limit 408-1. In another example, the second antenna 112 may transmit signals at a second transmit power 402-2 that is limited by a second transmit power limit 408-2. Though the transmit power 402 depicted in example plot 400-1 is steady in amplitude over time, in general, the transmit power 402 may vary in amplitude over time but may not exceed the transmit power limit 408 at any given time.

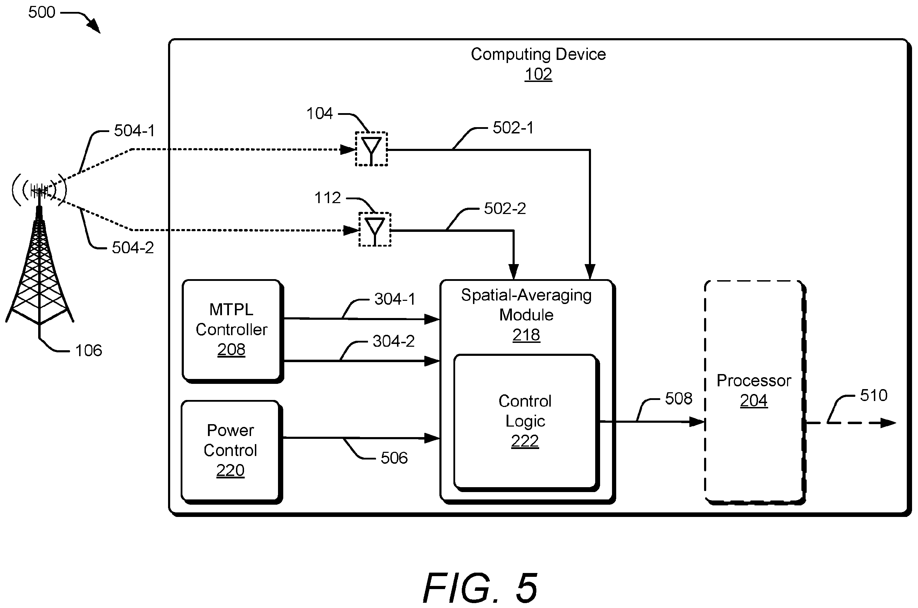

In contrast, time-averaging techniques are depicted in example plot 400-2. Time-averaging techniques enable the transmit power 402 of an antenna to vary in amplitude over time about an average transmit power limit (e.g., an MTPL 304). In this example, the transmit power 402 fluctuates above and below the MTPL 304 over time but maintains an average transmit power 404 over the duration of time 406 that does not exceed the MTPL 304 at any given time (e.g., the current time 410). The duration of time 406 may be considered a sliding window of a fixed amount of time that moves with the current time 410. Though the transmit power 402 of this example is depicted as a step function, the transmit power 402 may vary over time as long as the average transmit power 404 does not exceed the MTPL 304. In particular, the transmit power 402 may be non-linear, linear, periodic, or non-periodic over time and include sinusoidal functions, delta functions, exponential trends, and so forth. The spatial-averaging module 218 may monitor the transmit power 402 and/or the average transmit power 404 of each antenna to enable the techniques of spatial averaging as further described with respect to FIG. 5.

### Example Spatial-Averaging Module

FIG. 5 illustrates an example environment 500 in which the spatial-averaging module 218 is depicted as part of a computing device 102. The spatial-averaging module 218 may utilize the separately determined: (1) MTPLs 304, (2) transmit powers 402, and/or (3) average transmit powers 404 to enable separate determinations of transmit power capacities for each antenna of the device. For example, the spatial-averaging module 218 may receive the first MTPL 304-1 and the second MTPL 304-2 from the MTPL controller 208. The spatial-averaging module 218 may also determine a first transmit power 402-1 of the first antenna 104 and a second transmit power 402-2 of the second antenna 112 to calculate a first average transmit power 402-1 and a second average transmit power 404-2, respectively.

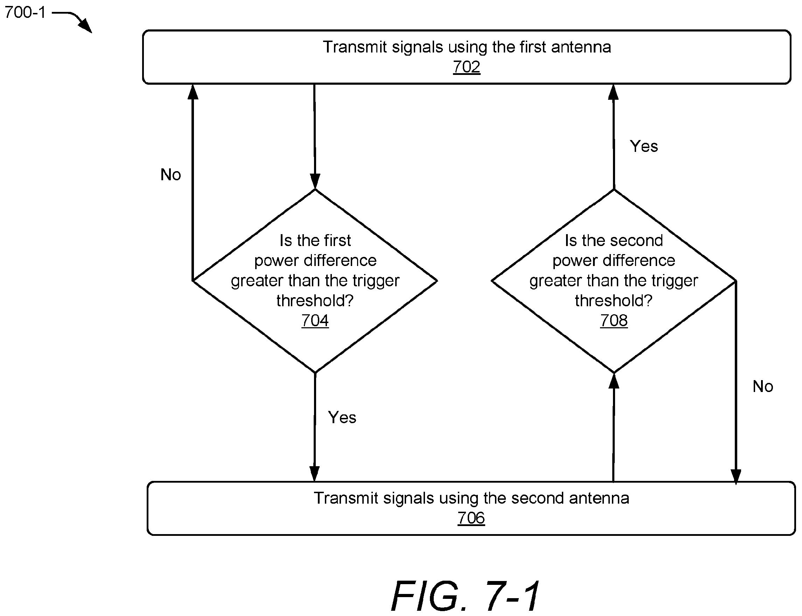

In addition, the spatial-averaging module 218 may receive a first reference signal receiver power (RSRP) 502-1 from the first antenna 104 and a second RSRP 502-2 from the second antenna 112. Each RSRP 502 may refer to an ability of each antenna to receive base signals 504 (e.g., base signals 504-1 and 504-2) from a base station 106. For example, an antenna may be manufactured in a particular way (e.g., including specific bandwidths or power capabilities) or positioned within the computing device 102 in a way that enables a better wireless connection 108 with a base station 106 when compared to another antenna of that device. A transmit power capacity of an antenna may be based on, in part, an RSRP 502 of that antenna. Furthermore, antenna-switching decisions may be based on the transmit power capacity (and by extension, the RSRP 502) of an antenna as described with reference to FIG. 7-1.

The spatial-averaging module 218 may also receive a power-control level (PCL) 506 from the power control 220. The PCL 506 may represent a power level recommended by a cellular network. For example, the PCL 506 may be greater (e.g., requiring greater transmit powers to perform wireless operations) when the computing device 102 is farther away from the base station 106. Conversely, the PCL 506 may be lower (e.g., requiring lower transmit powers to perform wireless operations) when the computing device 102 is located in close proximity to the base station 106. The spatial-averaging module 218 may compare an MTPL 304 of each antenna to a PCL 506 to determine, in part, a transmit power capacity for each antenna. If the PCL 506 is less than an MTPL 304 of an antenna, then the transmit power capacity of that antenna may be based on the PCL 506. Therefore, the antenna may be instructed by the spatial-averaging module 218 to transmit signals at or below the PCL 506. If, however, the MTPL 304 of that antenna is less than the PCL 506, then the transmit power capacity of that antenna may be based on the MTPL 304. This disclosure will focus on the latter case when the MTPL 304 of a given antenna is less than the PCL 506.

The spatial-averaging module 218 processes this information to independently determine a transmit power capacity for each antenna of the device. Based on these transmit power capacities, the spatial-averaging module 218 may use a control logic 222 to determine one or more control signals 508 to change, for instance, an antenna currently used to transmit EM signals. In general, the control signals 508 may contain instructions (e.g., recommended transmit powers) on transmitting signals using one or more antennas. Optionally, a processor 204 may receive one or more control signals 508 and instruct an antenna using one or more triggers 510 to perform operations that enable the techniques of spatial averaging. These triggers 510 may change a transmit power of and/or an operational state (e.g., on or off) of one or more antennas. While not depicted, additional circuitry may be included between the spatial-averaging module 218 and one or more antennas of the device. For instance, the computing device 102 may include one or more filters (e.g., duplex filters), RF switches, antenna switches, modulators, demodulators, and/or diodes to control an antenna.

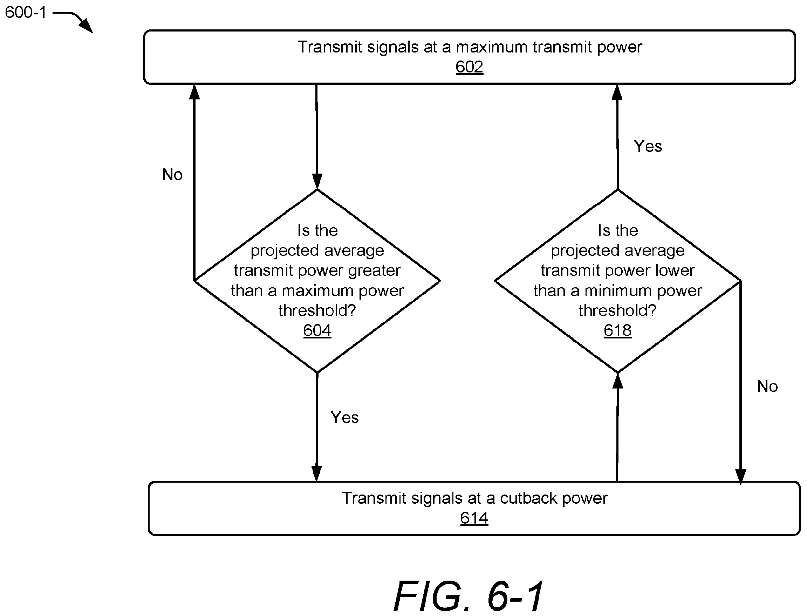

While reference is made in this disclosure to the processor 204, the spatial-averaging module 218 may additionally include a system processor to trigger one or more antennas. The spatial-averaging module 218 may also use a combination of a system processor and one or more processors of the computing device (e.g., the processor 204) to perform the techniques of spatial averaging of transmission power. Each transmit power capacity, determined by the spatial-averaging module 218, may also include portions of a transmit power used for Bluetooth^{®} operations, Wi-Fi^{®} operations, Wi-Fi^{®} hotspots, and so forth. Implementations of the spatial-averaging module 218 are further described with respect to FIG 6-1.

### Examples of Power Cutbacks

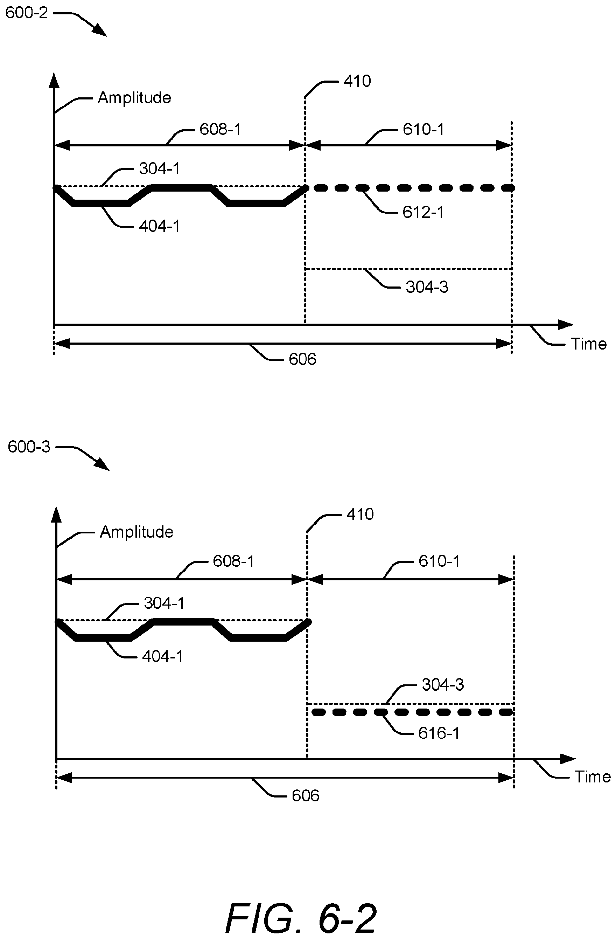

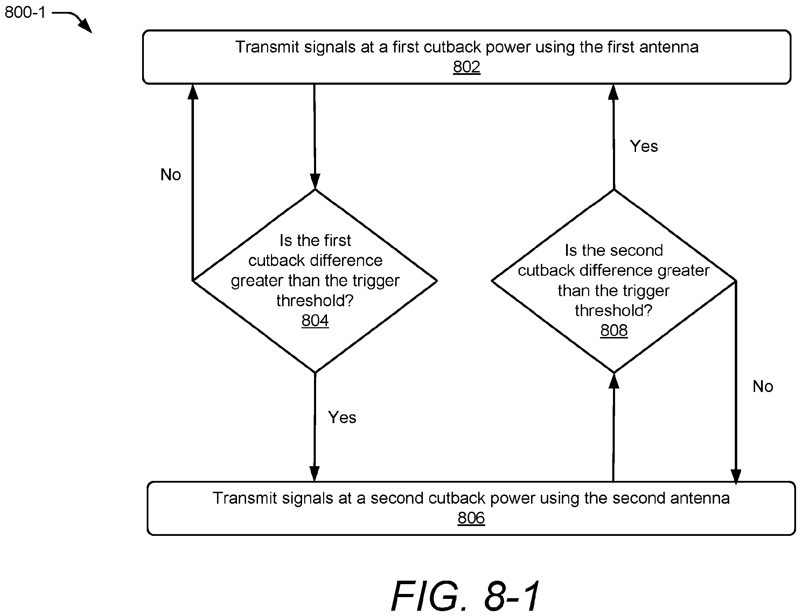

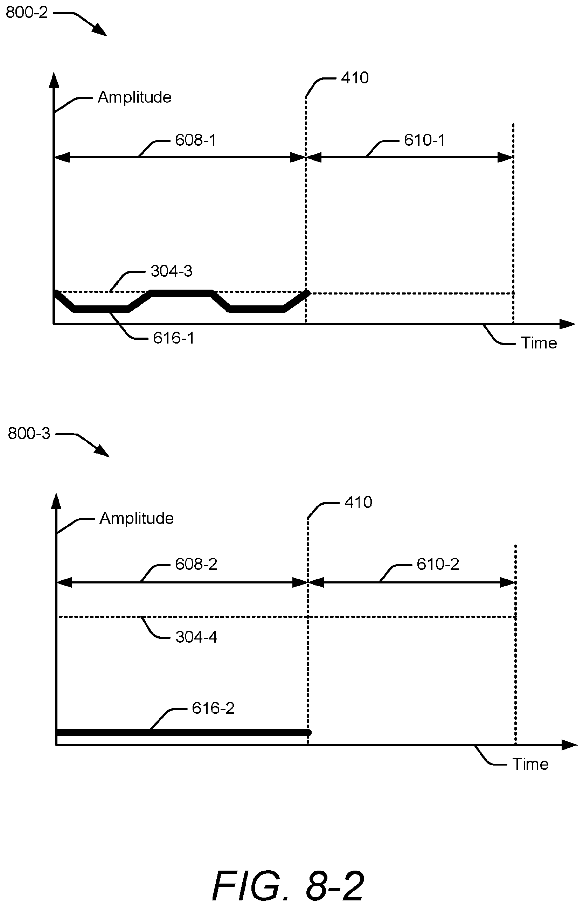

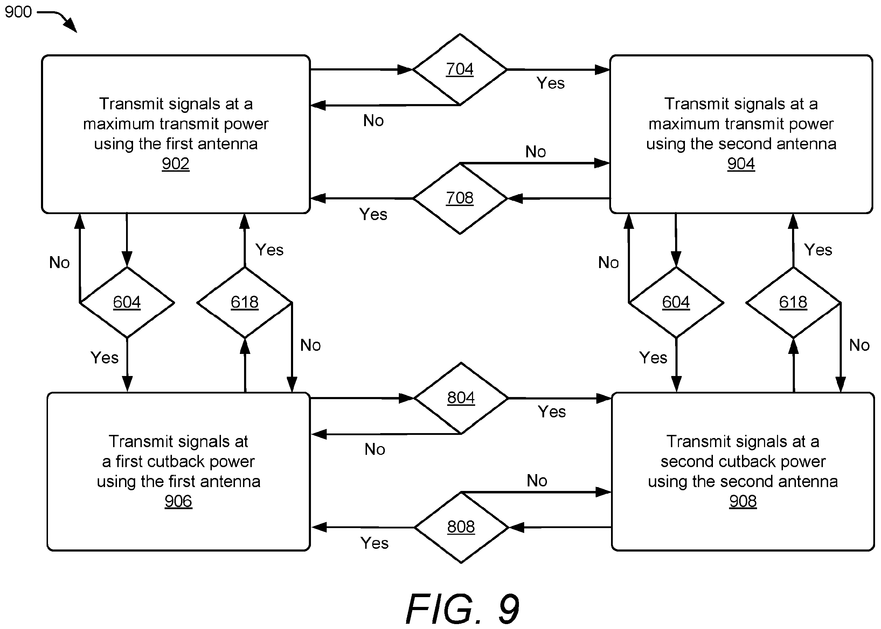

FIGs. 6-1 and 6-2 illustrate an example logic 600-1 for, and example plots 600-2 and 600-3 of, power cutbacks for an antenna. Though this disclosure describes spatial-averaging techniques to reduce power cutbacks, in some situations, power cutbacks may be unavoidable. FIGs. 6-1 and 6-2 are referenced to generally describe power cutbacks as they relate to the techniques of spatial averaging, whereas FIGs. 8-1, 8-2, and 9 describe additional embodiments of power cutbacks incorporated with antenna switching. If the transmit power (e.g., the transmit power 402 or average transmit power 404) of an antenna needs to be reduced (e.g., cutback) to comply with RF exposure regulations, then the example logic 600-1 may be used by the spatial-averaging module 218.

At 602, the spatial-averaging module 218 may determine that an antenna is transmitting signals at a maximum transmit power at a current time 410. As depicted in example plot 600-2 of FIG. 6-2, the first antenna 104 may transmit signals at a first average transmit power 404-1 that is set at the maximum transmit power (e.g., limited by the first MTPL 304-1). In this example, the computing device 102 may need to transmit signals at the maximum transmit power because the device is in a remote location far from a base station (e.g., the base station 106). Based on, in part, the first MTPL 304-1, the spatial-averaging module 218 may determine that the maximum transmit power is permitted by RF regulations at this current time 410.

At 604, the spatial-averaging module 218 determines whether a projected average transmit power, averaged over a period of time 606, is greater than a maximum power threshold. The maximum power threshold may represent a maximum amount of power an antenna is permitted to transmit during the period of time 606. The maximum power threshold may be set to, for instance, the lower value of an MTPL 304 of an antenna or the PCL 506 as averaged over the period of time 606. The period of time 606 may be set at a length of time that is similar to the duration of time 406 and includes a history period 608 and a future period 610. The period of time 606 may be an amount of time (e.g., an interval of transmission time) in which the spatial-averaging module 218 determines whether an antenna may continue or begin transmitting signals at the maximum transmit power at a current time or future time without exceeding RF regulatory limits.

For example, the user 110 places their hand near the first antenna 104 (similar to example sequence 100), requiring additional RF exposure restrictions on the first average transmit power 404-1 (e.g., the maximum transmit power) of the first antenna 104. In particular, the RSI 314 from the RSI logic 214 may change, reducing the first MTPL 304-1 to a lower MTPL value (e.g., a third MTPL 304-3). The spatial-averaging module 218 may detect this change in the MTPL 304 of the first antenna 104 and determine (at 604) whether the first antenna 104 can continue transmitting signals at the maximum transmit power in the future (e.g., a first future period 610-1 depicted in example plot 600-2). The spatial-averaging module 218 may determine a first transmission prediction 612-1 for the first future period 610-1 based on the assumption that the first antenna 104 continues transmitting at the maximum transmit power. Using values of the first average transmit power 404-1 within a first history period 608-1 and the first transmission prediction 612-1 within the first future period 610-1, the spatial-averaging module 218 may average these values to determine if a first projected average transmit power (not shown) exceeds RF regulatory restrictions (e.g., the maximum power threshold) for this period of time 606. For example, the maximum power threshold may represent an MTPL value of the first antenna 104 as averaged over the period of time 606 based on the first MTPL 304-1 of the first history period 608-1 and the third MTPL 304-3 of the future period 610-1. If the projected average transmit power of an antenna is lower than a maximum power threshold, then the antenna may continue or begin transmitting signals at the maximum transmit power (at 602).

If instead, the projected average transmit power of an antenna is greater than the maximum power threshold (as depicted in example plot 600-2), the spatial-averaging module 218 may instruct the antenna to transmit signals at a cutback power 616 as depicted at 614. In example plot 600-3, the first transmit power capacity may be reduced based on the third MTPL 304-3, and the first average transmit power 404-1 may be limited by this third MTPL 304-3 during the first future period 610-1. Therefore, the first antenna 104 may be restricted to transmitting signals at a lower average transmit power (e.g., a first cutback power 616-1) to comply with RF regulations. In particular, the spatial-averaging module 218 may use the control logic 222 to send one or more control signals 508 to the processor 204. The processor 204 may send one or more triggers 510 that reduce the maximum transmit power of the first antenna 104 to the first cutback power 616-1. Though not depicted, the spatial-averaging module 218 may alternatively reduce the maximum transmit power of the first antenna 104 to the first cutback power 616-1 without using a processor.

While transmitting signals at a cutback power 610, the spatial-averaging module 218 determines (at 618) whether another projected average transmit power, averaged over another period of time, is lower than a minimum power threshold. The minimum power threshold may be set to, for instance, the maximum power threshold minus a margin (e.g., 1-2 decibels (dB)). As depicted in example plot 600-3, the first antenna 104 may transmit signals at the first cutback power 616-1, which is limited by the third MTPL 304-3. At a later time (not depicted), the user 110 removes their hand from the computing device 102, allowing the first antenna 104 to transmit signals at the maximum transmit power (limited by the first MTPL 304-1). Similar to the procedures described at 604, the spatial-averaging module 218 may determine whether another projected average transmit power of the first antenna 104, averaged over another period of time, is lower than the minimum power threshold. In particular, the spatial-averaging module 218 may average the transmission associated with another first history period (incorporating aspects of the first average transmit power 404-1 and/or the first cutback power 616-1) and another first future period (assuming the maximum transmit power). If this projected average transmit power is greater than the minimum power threshold, then the first antenna 104 may continue transmitting signals at the first cutback power 616-1. If instead, the projected average transmit power is lower than the minimum power threshold, then the first antenna 104 may begin transmitting signals at the maximum transmit power (at 602).

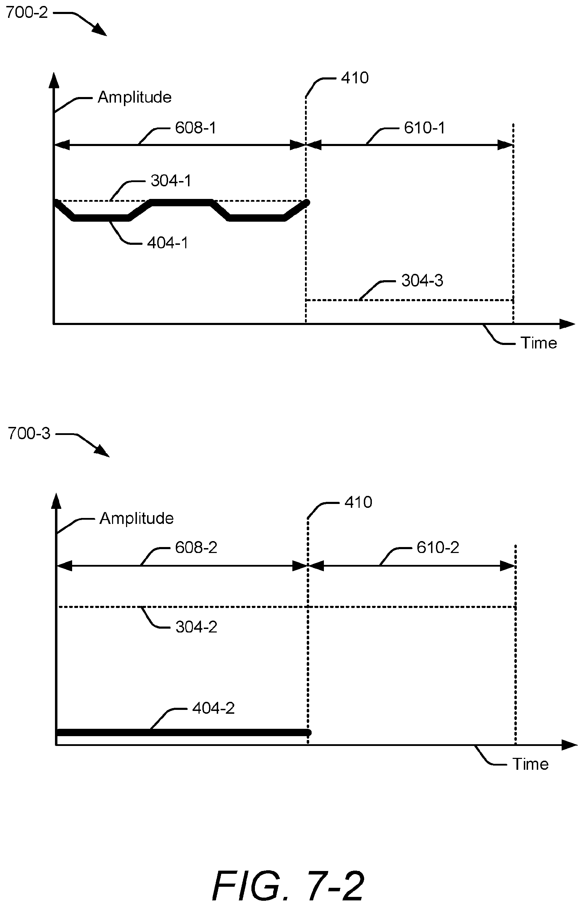

The power-cutback techniques described in FIGs. 6-1 and 6-2 may be repeated periodically over time and/or triggered to be performed by, for instance, a processor of the computing device 102. For example, the spatial-averaging module 218 may detect a change in an MTPL 304 of an antenna and perform any one or more of the steps in example logic 600-1 in response to this detection. The techniques described with respect to FIGs. 6-1 and 6-2 may also be applied to the second antenna 112 and, in general, to any antenna of the computing device 102 at any time and in any sequence or combination. The spatial-averaging techniques of this disclosure also include antenna switching, as further described with respect to FIGs. 7-1 and 7-2.

### Examples of Antenna Switching

FIGs. 7-1 and 7-2 illustrate an example logic 700-1 for, and example plots 700-2 and 700-3 of, antenna switching. Antenna-switching decisions of the spatial-averaging techniques may be based on transmit power capacities of one or more antennas that are determined independently from, or with reduced dependence on, a transmit power of another antenna.

In the example logic 700-1 of FIG. 7-1, the computing device 102 may be transmitting signals using the first antenna 104 as indicated at 702. As depicted in the example plot 700-2 of FIG. 7-2, the first antenna 104 may transmit signals at the first average transmit power 404-1, which is limited by the first MTPL 304-1. In this example, the first average transmit power 404-1 may be set to a maximum transmit power to improve performance of the device. Though in general, the first average transmit power 404-1 may be set at any transmit power, including the first cutback power 616-1. Similarly, as depicted in example plot 700-3, the second antenna 112 may not be primarily used to transmit signals at a current time 410 (and may not have been primarily used during the second history period 608-2). Though the second transmit power capacity may be limited by the second MTPL 304-2, the second average transmit power 404-2 may be significantly lower than the second MTPL 304-2 as depicted in this example plot 700-3.

At 704, the spatial-averaging module 218 determines whether a first power difference is greater than a trigger threshold to perform antenna switching. The first power difference may be a comparison between the first transmit power capacity of the first antenna 104 and the second transmit power capacity of the second antenna 112. The first transmit power capacity may be based on an MTPL 304 and RSRP 502 of the first antenna 104. The second transmit power capacity may be based on an MTPL 304 and RSRP 502 of the second antenna 112. Therefore, the first power difference may be: (MTPL2 - MTPL1) + (RSRP2 - RSRP1), where MTPL2, MTPL1, RSRP2, and RSRP1 represent current values (e.g., at a current time 410) of the MTPL 304 of the second antenna 112, the MTPL 304 of the first antenna 104, the second RSRP 502-2, and the first RSRP 502-1, respectively. The trigger threshold may represent a minimum value of the first power difference needed to switch an antenna that is used to transmit signals at a current time or planned time in the future. If the first power difference is lower than the trigger threshold, then the first antenna 104 may continue transmitting signals (at 702). If, however, the first power difference is greater than the trigger threshold, then the spatial-averaging module 218 may instruct the computing device 102 to: (1) transmit signals using the second antenna 112 and (2) refrain from transmitting signals using the first antenna 104 as depicted at 706.

For example, a user 110 places their hand near the first antenna 104, requiring additional RF exposure restrictions on the first average transmit power 404-1 (set at a maximum transmit power) of the first antenna 104. The first MTPL 304-1 may be lowered to, for instance, the third MTPL 304-3 at a current time 410. The second antenna 112, however, may not be required to reduce the second MTPL 304-2. If the second MTPL 304-2 is greater than the third MTPL 304-3, then the second antenna 112 may be able to transmit signals at a greater power than the first antenna 104 at the current time 410. Assuming the first RSRP 502-1 is similar to the second RSRP 502-2 (for simplicity of this example), the first transmit power capacity of the first antenna 104 may be lower than the second transmit power capacity of the second antenna 112 (based on a comparison of MTPLs 304) at the current time 410. Therefore, the first power difference may be greater than a trigger threshold needed to switch from transmitting signals using the first antenna 104 to transmitting signals using the second antenna 112.

In another example (not depicted), the third MTPL 304-3 may be similar to the second MTPL 304-2, but the first RSRP 502-1 may be significantly lower than the second RSRP 502-2. In this example, the first transmit power capacity may be lower than the second transmit power capacity. Therefore, the first power difference may be greater than the trigger threshold needed for antenna switching. In yet another example (not depicted), the first RSRP 502-1 may be distinct from the second RSRP 502-2, and the third MTPL 304-3 may also be distinct from the second MTPL 304-2. In comparing the first transmit power capacity to the second transmit power capacity, the spatial-averaging module 218 may determine that the first power difference is greater than the trigger threshold needed for antenna switching.

More specifically in these examples, the spatial-averaging module 218 may generate a control signal 508 to instruct the first antenna 104 to refrain from transmitting signals at the current time 410. This control signal 508 may be used to change the operational state (e.g., active to inactive) or reduce the transmission power of the first antenna 104. Another control signal 508 may be sent to instruct the second antenna 112 to begin transmitting signals at the current time 410. This control signal 508 may also change the operational state (e.g., active to inactive) or increase the transmission power of the second antenna 112. Each of these control signals 508 may optionally be sent to a processor (e.g., the processor 204) to determine triggers 510 to control each antenna of the computing device 102.

When the computing device 102 is transmitting signals using the second antenna 112, the spatial-averaging module 218 may determine (at 708) whether a second power difference is greater than the trigger threshold. The second power difference may be a comparison between the second transmit power capacity (based on an MTPL 304 and RSRP 502 of the second antenna 112) and the first transmit power capacity (based on an MTPL 304 and RSRP 502 of the first antenna 104). In reference to 704, the second power difference may be represented by: (MTPL1 - MTPL2) + (RSRP1 - RSRP2). If the second power difference is lower than the trigger threshold, then the second antenna 112 may continue transmitting signals at 706. If, however, the second power difference is greater than the trigger threshold, then (at 702) the spatial-averaging module 218 may instruct the computing device 102 to: (1) transmit signals using the first antenna 104 and (2) refrain from transmitting signals using the second antenna 112. The techniques associated with 708 are similar to the techniques described with respect to 704.

For example, the user 110 removes their hand from the computing device 102 at a later time, requiring fewer RF exposure restrictions on a transmit power of an antenna. The third MTPL 304-3 may be increased to the first MTPL 304-1, and the second MTPL 304-2 may remain unchanged at this later time. The first MTPL 304-1, however, may be greater than the second MTPL 304-2, allowing the first antenna 104 to transmit signals at a greater power than the second antenna 112 at this later time. Assuming the first RSRP 502-1 is similar to the second RSRP 502-2 (for simplicity of this example), the first transmit power capacity of the first antenna 104 may be greater than the second transmit power capacity of the second antenna 112 (based on a comparison of MTPLs 304) at this later time. Therefore, the second power difference may be greater than a trigger threshold needed to switch from transmitting signals using the second antenna 112 to transmitting signals using the first antenna 104.

The antenna-switching techniques described in FIGs. 7-1 and 7-2 may be repeated periodically over time and/or triggered to be performed by, for instance, a processor of the computing device 102. For example, the spatial-averaging module 218 may detect a change in an MTPL 304 of an antenna and perform any one or more of the steps in example logic 700-1. In addition to the logics described with reference to FIGs. 6-1 and 7-1, antenna switching may be performed between antennas restricted to cutback powers as further described with respect to FIGs. 8-1 and 8-2.

FIGs. 8-1 and 8-2 illustrate an example logic 800-1 for, and example plots 800-2 and 800-3 of, antenna switching at cutback powers 616. In these examples, a maximum transmit power may not be permitted by RF regulations for any antenna of a device, but antenna switching may still be conducted to improve performance (e.g., transmission powers) of the device. Therefore, the techniques of spatial averaging may include antenna switching between antennas that are restricted to cutback powers.

At 802 of example logic 800-1, the spatial-averaging module 218 determines that the first antenna 104 is being used to transmit signals at a first cutback power 616-1 (limited by the third MTPL 304-3), which is also depicted in example plot 800-2. Even though the second antenna 112 of example plot 800-3 is not primarily being used to transmit signals, the second cutback power 616-2 may be limited by the fourth MTPL 304-4. In example plot 800-3, the fourth MTPL 304-4 is greater than the third MTPL 304-3.

In an example, the user 110 places their hand near the computing device 102, restricting the transmit powers of the first antenna 104 and the second antenna 112. The first transmit power capacity is reduced based on the third MTPL 304-3, and the second transmit power capacity is reduced based on the fourth MTPL 304-4. The spatial-averaging module 218, however, may determine which of these two antennas can transmit signals at a higher cutback power 616 to improve the quality of, for instance, a wireless communication with another device.

At 804, the spatial-averaging module 218 determines whether a first cutback difference is greater than the trigger threshold. The first cutback difference may be a comparison between the first transmit power capacity of the first antenna 104 (based on the third MTPL 304-3 and the first RSRP 502-1) and the second transmit power capacity of the second antenna 112 (based on the fourth MTPL 304-4 and the second RSRP 502-2). The first cutback difference may be analogous to the representation of the first power difference: (MTPL2 - MTPL1) + (RSRP2 - RSRP1).

If the first cutback difference is lower than the trigger threshold, then the first antenna 104 may continue transmitting signals at the first cutback power 616-1. If, however, the first cutback difference is greater than the trigger threshold, then at 806, the spatial-averaging module 218 may instruct the computing device 102 to: (1) transmit signals using the second antenna 112 and (2) refrain from transmitting signals using the first antenna 104. The techniques referenced at 804 are similar to the techniques referenced at 704 in example logic 700-1.

When the computing device 102 is transmitting signals using the second antenna 112, the spatial-averaging module 218 may determine (at 808) whether a second cutback difference is greater than the trigger threshold. The second cutback difference may be a comparison between the second transmit power capacity and the first transmit power capacity. The second cutback difference may be analogous to the representation of the second power difference: (MTPL1 - MTPL2) + (RSRP1 - RSRP2).

If the second cutback difference is lower than the trigger threshold, then the second antenna 112 may continue transmitting signals. If, however, the second cutback difference is greater than the trigger threshold, then (at 802) the spatial-averaging module 218 may instruct the computing device 102 to: (1) transmit signals using the first antenna 104 and (2) refrain from transmitting signals using the second antenna 112. The techniques of 808 are similar to the techniques described with respect to 708 in example logic 700-1.

Any one of the example logics 600-1, 700-1, and 800-1 may be performed independently or simultaneously, and in any combination at any given time. Each step of these logics may be performed periodically or upon being triggered, for instance, by a processor. FIG. 9 combines the example logics 600-1, 700-1, and 800-1 to summarize the techniques of spatial averaging.

### Example Summary of Spatial Averaging Techniques

FIG. 9 illustrates a combination of the example logics 600-1, 700-1, and 800-1 to summarize the techniques of spatial averaging. At 902, the computing device 102 may be transmitting signals at a maximum transmit power using the first antenna 104. At 904, the computing device 102 may be transmitting signals at a maximum power using the second antenna 112. At 906, the computing device 102 may be transmitting signals at the first cutback power 616-1 using the first antenna 104. At 908, the computing device 102 may be transmitting signals at the second cutback power 616-2 using the second antenna 112. Required conditions to change between any one of the states depicted at 902, 904, 906, and 908 are described with respect to the example logics 600-1, 700-1, and 800-1.

At any one of these states depicted at 902, 904, 906, and 908, the spatial-averaging module 218 may determine that more than one condition is satisfied at a given time. Therefore, preference is given to an action that increases a transmission power of the device the most. For example, the first antenna 104 may be transmitting signals at a maximum power (e.g., at 902), and the spatial-averaging module 218 simultaneously determines: (1) the projected average transmit power of the first antenna 104 is greater than the maximum power threshold (e.g., requiring power cutbacks at 604), and (2) the first power difference is greater than the trigger threshold (e.g., the second transmit power capacity is greater than the first transmit power capacity at 704). In this example, it may be preferable to prioritize the action at 704, which allows the computing device 102 to continue transmitting signals at a maximum power using the second antenna 112 (e.g., using the second antenna 112 to transmit signals at a second average transmit power 404-2 that is greater than the first cutback power 616-1 of the first antenna 104). While not depicted, there may be logic to support a direct transition between 904 and 906 and a direct transition between 902 and 908.

### Examples Antenna Configurations

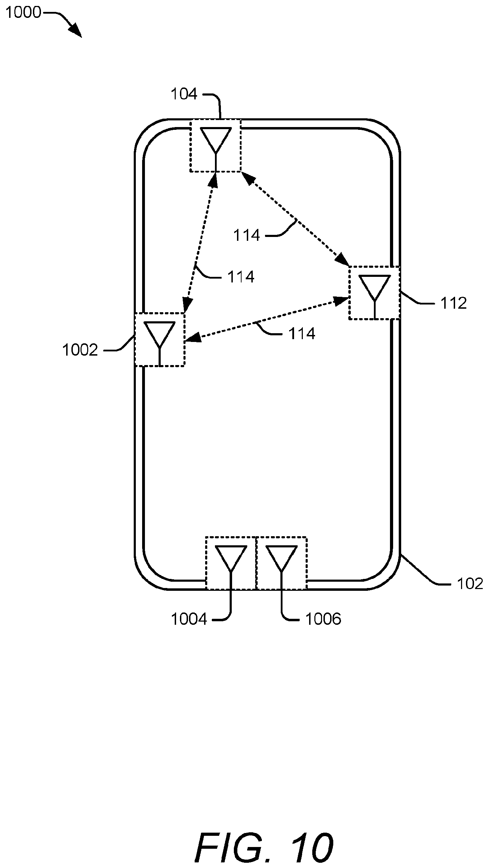

FIG. 10 illustrates an example computing device 102 with multiple antennas. The techniques of spatial averaging of transmission power may also be applied to three or more antennas of the computing device 102, as illustrated in example environment 1000. A third antenna 1002 may be positioned apart from the first antenna 104 and the second antenna 112 by an antenna separation 114. The third antenna 1002 may be associated with a third transmit power capacity that is based on a third transmit power limit (e.g., a fifth MTPL 304-5). The third transmit power capacity may be determined independently from the transmit power of the first antenna 104 and the second antenna 112 due to the antenna separation 114. The example logic 900 may be modified to include this third antenna 1002.

A fourth antenna 1004 and a fifth antenna 1006, however, are positioned in close proximity (e.g., separated by a distance lower than the antenna separation 114) on the computing device 102. In this example, a fourth transmit power capacity of the fourth antenna 1004 may be determined based on a fourth transmit power and with either reduced dependence or full dependence on a fifth transmit power of the fifth antenna 1006. Similarly, a fifth transmit power capacity of the fifth antenna 1006 may be determined based on the fifth transmit power and with either reduced dependence or full dependence on the fourth transmit power of the fourth antenna 1004.

### Example Techniques to Prevent Power Overshoots

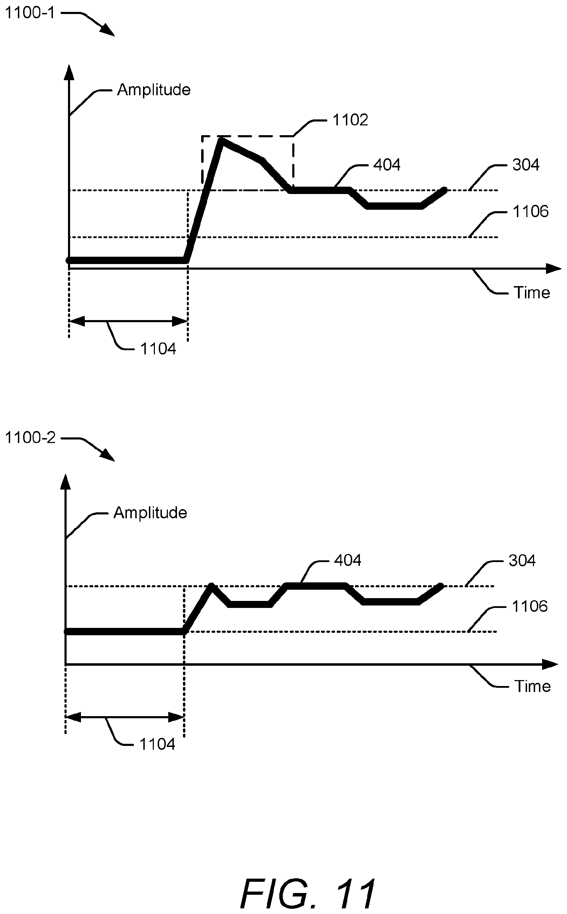

When utilizing time-averaging techniques, the average transmit power 404 of an antenna may exceed the MTPL 304 when a recent history of that antenna includes a period of low transmit powers (e.g., due to an inactive state of the antenna or minimal usage by the computing device 102). FIG. 11 illustrates example plots 1100 that depict techniques to prevent power overshoots 1102. A power overshoot 1102 may be caused by averaging a transmit power 402 over a duration of time 406 that includes a low-power period 1104 in which the transmit power 402 had a low amplitude. In the example plot 1100-1, the average transmit power 404 of the low-power period 1104 is lower than a power floor 1106. The power floor 1106 may represent a minimum average transmit power required to prevent a power overshoot 1102.

To prevent a power overshoot 1102, a history of an antenna within the low-power period 1104 may be replaced with values at the power floor 1106 as depicted in example plot 1100-2. While the average transmit power 404 within the low-power period 1104 may be overwritten with values of the power floor 1106, the average transmit power 404, as transmitted by the device, has not changed.

### Example Methods

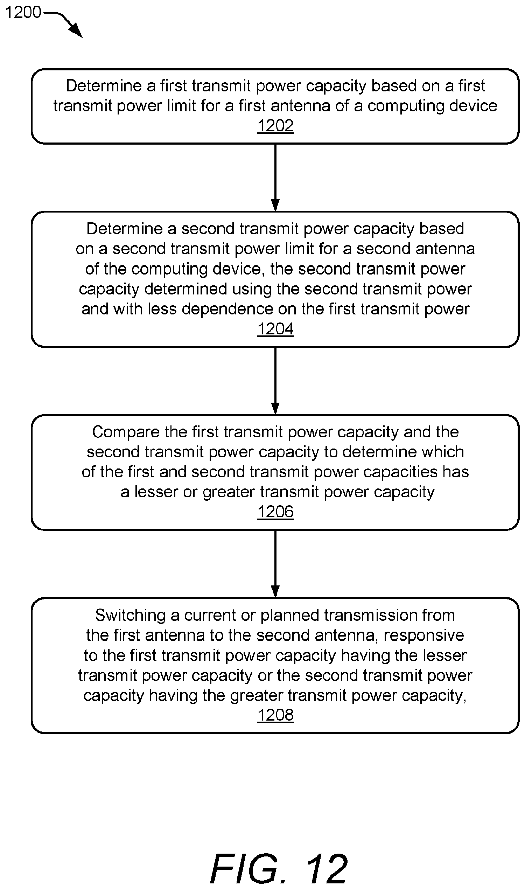

FIG. 12 illustrates an example method 1200 for spatial averaging of transmission power to reduce power cutbacks. Method 1200 is shown as sets of operations (or acts) performed and is not necessarily limited to the order or combinations in which the operations are shown herein. Furthermore, any of one or more of the operations can be repeated, combined, reorganized, or linked to provide a wide array of additional and/or alternative methods. In portions of the following discussion, reference may be made to example environments, example logics, or example plots of FIGs. 1-10, reference to which is made for example only. The techniques are not limited to performance by one entity or multiple entities operating on one computing device 102.

At 1202, a first transmit power capacity is determined based on a first transmit power limit for a first antenna of a computing device. For example, a first transmit power capacity may be determined based on a first transmit power limit (e.g., the first MTPL 304-1 and/or the first RSRP 502-1) for the first antenna 104 of the computing device 102.

At 1204, a second transmit power capacity is determined based on a second transmit power limit for a second antenna of the computing device. The second transmit power capacity is determined using the second transmit power and with less dependence on the first transmit power. For example, a second transmit power capacity may be determined based on a second transmit power limit (e.g., the second MTPL 304-2 and/or the second RSRP 502-2) for the second antenna 112 of the computing device 102. The second transmit power capacity may be determined using the second transmit power 402-1 and/or the second average transmit power 404-2 and with less dependence on the first transmit power 402-1 and/or the first average transmit power 404-1. Alternatively, the second transmit power capacity may be determined independently from the first transmit power 402-1 and first average transmit power 404-1 if the first antenna 104 and the second antenna 112 are separated sufficiently (e.g., by a distance similar to the antenna separation 114).

At 1206, the first transmit power capacity and the second transmit power capacity are compared to determine which of the first and second transmit power capacities has a lesser or greater transmit power capacity. For example, the first transmit power capacity of the first antenna 104 is compared to the second transmit power capacity of the second antenna 112 as described with respect to FIGs. 7-1 and 7-2. These two capacities are compared to determine which of the first transmit power capacity and the second transmit power capacity is the lesser or greater transmit power capacity.

At 1208, a current or planned transmission from the first antenna is switched to the second antenna, responsive to the first transmit power capacity having the lesser transmit power capacity or the second transmit power capacity having the greater transmit power capacity. For example, if at 704 in example logic 700-1 the first transmit power capacity is determined to be lower than the second transmit power capacity (e.g., the first power difference is greater than the trigger threshold), then the computing device 102 will switch a current or planned transmission from the first antenna 104 to the second antenna 112.

### Example Computing Systems

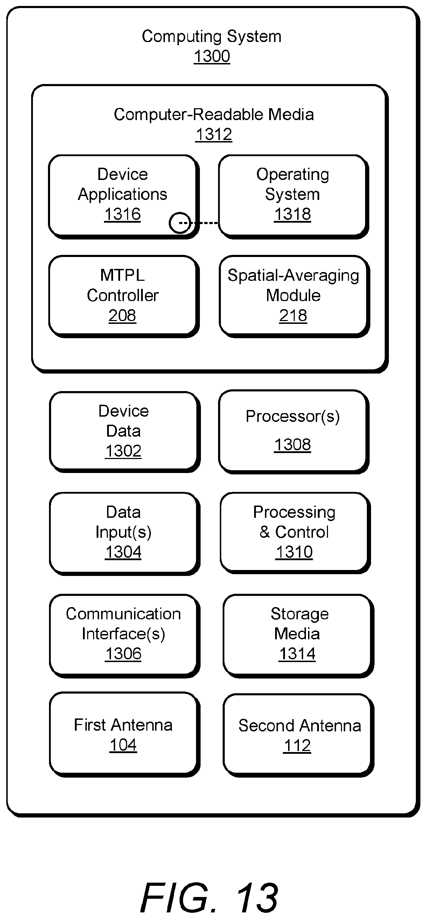

FIG. 13 illustrates an example computing system 1300 embodying, or in which techniques may be implemented that enable use of, the techniques of spatial averaging of transmission power to reduce power cutbacks. The example computing system 1300 may be implemented as any type of client, server, and/or computing device as described with reference to FIG. 2.

The computing system 1300 may include device data 1302 (e.g., received data, data that is being received, data scheduled for broadcast, or data packets of the data), the first antenna 104, and the second antenna 112. The device data 1302 or other device content may include configuration settings of the device, media content stored on the device, and/or information associated with a user of the device. Media content stored on the computing system 1300 may include any type of audio, video, and/or image data. The computing system 1300 may include one or more data inputs 1304 by which any type of data, media content, and/or inputs can be received, including inputs using one or more sensors 212, base signals 504, inputs regarding power control 220, transmission and/or receive signals from one or more antennas, user-selectable inputs (explicit or implicit), messages, music, television media content, recorded video content, and any other type of audio, video, and/or image data received from any content and/or data source.

The computing system 1300 may also include communication interfaces 1306, which may be implemented as any one or more of a serial and/or parallel interface, a wireless interface, any type of network interface, a modem, and any other type of communication interface. The communication interfaces 1306 may provide a connection and/or communication links between the computing system 1300 and a communication network by which other electronic, computing, and communication devices communicate data with the computing system 1300. For example, the communication interface 1306 may enable a wireless connection 108 between the computing device 102 and one or more base stations 106.

The computing system 1300 may include one or more processors 1308 (e.g., any of microprocessors, controllers, and the like), which process various computer-executable instructions to control the operation of the computing system 1300 and to enable techniques for, or in which can be embodied, spatial averaging of transmission power. Altematively, or in addition, the computing system 1300 may be implemented with any one or combination of hardware, firmware, or fixed logic circuitry that is implemented in connection with processing and control circuits, which are generally identified at 1310. Although not shown, the computing system 1300 may include a system bus or data transfer system that couples the various components within the device. A system bus may include any one or combination of different bus structures, including a memory bus or memory controller, a peripheral bus, a universal serial bus, and/or a processor or local bus that utilizes any of a variety of bus architectures.

The computing system 1300 may additionally include computer-readable media 1312, including one or more memory devices that enable persistent and/or non-transitory data storage (i.e., in contrast to mere signal transmission), examples of which include random access memory (RAM), non-volatile memory (e.g., any one or more of a read-only memory (ROM), flash memory, EPROM, EEPROM, and so forth), and a disk storage device. The disk storage device may be implemented as any type of magnetic or optical storage device, including a hard disk drive, a recordable and/or rewriteable compact disc (CD), any type of a digital versatile disc (DVD), and the like. The computing system 1300 may also include a mass storage media device (storage media) 1314.

The computer-readable media 1312 may provide data storage mechanisms to store the device data 1302, as well as various device applications 1316 and any other types of information and/or data related to operational aspects of the computing system 1300. For example, an operating system 1318 may be maintained as a computer application with the computer-readable media 1312 and executed on the processors 1308. The device applications 1316 may include a device manager, including any form of a control application, software application, signal-processing and control module, code that is native to a particular device, a hardware abstraction layer for a particular device, and so on. Using the spatial-averaging module 218, the computing system 1300 may determine transmit power capacities for each antenna. Using the spatial-averaging module 218, the computing system 1300 may perform antenna switching and power cutbacks using the transmit power capacity of each antenna to maximize a transmission power of the computing device 102.

### Conclusion

Although techniques and apparatuses for spatial averaging of transmission power to reduce power cutbacks have been described in language specific to features and/or methods, it is to be understood that the subject of the appended claims is not necessarily limited to the specific features or methods described. Rather, the specific features and methods are disclosed as example implementations of spatial averaging of transmission power to reduce power cutbacks.

## Claims

1. A method performed by a computing device (102) comprising:
determining (1202) a first transmit power capacity based on a first transmit power limit (408-1) for a first antenna (104) of the computing device (102), the computing device (102) configured to transmit signals at a first transmit power (402-1) using the first antenna (104), the first transmit power (402-1) limited by the first transmit power limit (408-1), the determining (1202) of the first transmit power capacity comprises averaging the first transmit power (402-1) over a duration of time (406);
determining (1204) a second transmit power capacity based on a second transmit power limit (408-2) for a second antenna (112) of the computing device (102), the computing device further (102) configured to transmit signals at a second transmit power (402-2) using the second antenna (112), the second transmit power (402-2) limited by the second transmit power limit (408-2), the determining (1204) of the second transmit power capacity comprises averaging the second transmit power (402-2) over the duration of time (406), the second transmit power capacity being determined by:
using the second transmit power (402-2) and the first transmit power (402-1) when the first antenna (104) and the second antenna (112) are spaced apart by a distance less than an antenna separation (114), the antenna separation (114) being at least a minimum distance the first antenna (104) and the second antenna (112) are separated, and
using the second transmit power (402-2) without dependence on the first transmit power (402-1) when the first antenna (104) and the second antenna (112) are spaced apart by a distance of at least the antenna separation (114);
comparing (1206) the first transmit power capacity and the second transmit power capacity to determine which of the first and second transmit power capacities has a lesser or greater transmit power capacity; and
responsive to the first transmit power capacity having the lesser transmit power capacity or the second transmit power capacity having the greater transmit power capacity, switching (1208) a current or planned transmission from the first antenna (104) to the second antenna (112).

2. The method as recited by claim 1, wherein the switching (1208) of the current or planned transmission from the first antenna (104) to the second antenna (112) is responsive to a power difference between the lesser transmit power capacity and the greater transmit power capacity being greater than or equal to a trigger threshold.

3. The method as recited by any preceding claim, wherein:
the switching (1208) of the current or planned transmission from the first antenna (104) to the second antenna (112) comprises:
stopping the current or planned transmission from the first antenna (104); and
transmitting or planning transmission of signals using the second antenna (112);
and
the method further comprises:
responsive to transmitting signals using the second antenna (112), determining that a third transmit power capacity of the first antenna (104) is greater than a fourth transmit power capacity of the second antenna (112); and
responsive to the determining, switching transmission from the second antenna (112) to the first antenna (104).

4. The method as recited by claim 1, further comprising:
averaging the first transmit power limit (408-1) over the duration of time (406) to determine a first maximum transmit power level, MTPL, (304-1) of the first antenna (104), wherein the determining of the first transmit power capacity is based on the first MTPL (304-1);
and
averaging the second transmit power limit (408-2) over the duration of time (406) to determine a second MTPL (304-2) of the second antenna (112), wherein the determining of the second transmit power capacity is based on the second MTPL (304-2).

5. The method as recited by claim 4, further comprising:
receiving a first reference signal receiver power, RSRP, (502-1) of the first antenna (104), wherein the determining (1202) of the first transmit power capacity is based on the first RSRP (502-1) and the first MTPL (304-1); and
receiving a second RSRP (502-2) of the second antenna (112), wherein the determining (1204) of the second transmit power capacity is based on the second RSRP (502-2) and the second MTPL (304-2).

6. The method as recited by any one of claims 4 or 5, further comprising:
detecting a decrease in the first MTPL (304-1) to a third MTPL (304-3);
responsive to the detected decrease:
reducing the first transmit power capacity based on the third MTPL (304-3) without reducing the second transmit power capacity; and
reducing the first average transmit power (404-1) to a first cutback power (616-1), the first cutback power (616-1) limited by the third MTPL (304-3).

7. The method as recited by claim 6, further comprising:
responsive to determining that the first cutback power (616-1) is greater than a minimum power threshold, determining whether a first power difference is greater than a trigger threshold to perform antenna switching, the first power difference determined by comparing the reduced first transmit power capacity to the second transmit power capacity; and
responsive to determining that the first power difference is greater than the trigger threshold, performing the switching by:
stopping the current or planned transmission from the first antenna (104); and
transmitting or planning transmission of signals using the second antenna (112).

8. The method as recited by any one of claims 4 or 5, further comprising:
detecting a decrease in the second MTPL (304-2) to a fourth MTPL (304-4);
responsive to the detected decrease:
reducing the second transmit power capacity based on the fourth MTPL (304-4) without reducing the first transmit power capacity; and
reducing the second average transmit power (404-2) to a second cutback power (616-2), the second cutback power (616-2) limited by the fourth MTPL (304-4).

9. The method as recited by claim 8, further comprising:
responsive to determining that the second cutback power (616-2) is greater than a minimum power threshold, determining whether a second power difference is greater than a trigger threshold to perform antenna switching, the second power difference determined by comparing the reduced second transmit power capacity to the first transmit power capacity; and
responsive to determining that the second power difference is greater than the trigger threshold, performing a second antenna switch by:
stopping the current or planned transmission from the first antenna (104); and
transmitting or planning transmission of signals using the second antenna (112).

10. The method as recited by claim 5, further comprising:
receive**,** by a spatial-averaging module (218) of the computing device, a power-control level, PCL, (506) from a power control (220) of the computing device and compare the first MTPL (304-1) and the second MTPL (304-2) to the PCL (506) to determine the first transmit power capacity and the second transmit power capacity, respectively.

11. The method as recited by claim 10, further comprising:
if the PCL (506) is less than the first MTPL (304-1), the first transmit power capacity is determined based on the PCL (506); and
if the first MTPL (304-1) is less than the PCL (506), the first transmit power capacity is determined based on the first MTPL (304-1).

12. The method as recited by claim 10 or 11, further comprising:
if the PCL (506) is less than the second MTPL (304-2), the second transmit power capacity is determined based on the PCL (506); and
if the second MTPL (304-2) is less than the PCL (506), the first transmit power capacity is determined based on the second MTPL (304-2).

13. The method as recited by any of claims 1-9,
wherein:
the first transmit power limit (408-1) corresponds to a first regulatory limit for the first antenna (104) to transmit radio-frequency signals; and
the second transmit power limit (408-2) corresponds to a second regulatory limit for the second antenna (114) to transmit radio-frequency signals.

14. The method as recited by any of claims 1-9, further comprising:
determining a third transmit power capacity based on a third transmit power limit for a third antenna (1002) of the computing device (102), the computing device (102) further configured to transmit signals at a third transmit power using the third antenna (1002), the third transmit power limited by the third transmit power limit, the determining of the third transmit power capacity comprises averaging the third transmit power over the duration of time (406), the third transmit power capacity determined using the third transmit power without dependence on the first transmit power (402-1) and the second transmit power (402-2) when the third antenna (1002) and the first and second antennas (104, 112) are spaced apart by a distance at least the antenna separation (114); and
performing antenna switching, responsive to comparing the third transmit power capacity to the first transmit power capacity or the second transmit power capacity.

15. A computing device (102) comprising:
an enclosure;
at least two antennas (104, 112), each antenna positioned within the enclosure and configured to receive and transmit signals;
at least one processor (204); and
computer-readable storage media (206) comprising instructions, which when executed by the processor (204), direct the computing device (102) to perform any method recited in claims 1 to 13 using the at least two antennas (104, 112).

## Patentansprüche

1. Verfahren, durchgeführt von einer Rechenvorrichtung (102), umfassend:
Bestimmen (1202) einer ersten Übertragungsleistungskapazität basierend auf einem ersten Übertragungsleistungsgrenzwert (408-1) für eine erste Antenne (104) der Rechenvorrichtung (102), wobei die Rechenvorrichtung (102)
dazu konfiguriert ist, Signale mit einer ersten Übertragungsleistung (402-1) unter Verwendung der ersten Antenne (104) zu übertragen, wobei die erste Übertragungsleistung (402-1) durch den ersten Übertragungsleistungsgrenzwert (408-1) begrenzt ist, wobei das Bestimmen (1202) der ersten Übertragungsleistungskapazität das Mitteln der ersten Übertragungsleistung (402-1) über eine Zeitdauer (406) umfasst;
Bestimmen (1204) einer zweiten Übertragungsleistungskapazität basierend auf einem zweiten Übertragungsleistungsgrenzwert (408-2) für eine zweite Antenne (112) der Rechenvorrichtung (102), wobei die Rechenvorrichtung (102) ferner dazu konfiguriert ist, Signale mit einer zweiten Übertragungsleistung (402-2) unter Verwendung der zweiten Antenne (112) zu übertragen, wobei die zweite Übertragungsleistung (402-2) durch den zweiten Übertragungsleistungsgrenzwert (408-2) begrenzt ist, wobei das Bestimmen (1204) der zweiten Übertragungsleistungskapazität das Mitteln der zweiten Übertragungsleistung (402-2) über die Zeitdauer (406) umfasst, wobei die zweite Übertragungsleistungskapazität bestimmt wird durch:
Verwenden der zweiten Übertragungsleistung (402-2) und der ersten Übertragungsleistung (402-1), wenn die erste Antenne (104) und die zweite Antenne (112) um einen Abstand beabstandet sind,
der geringer als eine Antennentrennung (114) ist, wobei die Antennentrennung (114) mindestens ein Mindestabstand ist, um den die erste Antenne (104) und die zweite Antenne (112) getrennt sind, und
Verwenden der zweiten Übertragungsleistung (402-2) ohne Abhängigkeit von der ersten Übertragungsleistung (402-1), wenn die erste Antenne (104) und die zweite Antenne (112) um einen Abstand von mindestens der Antennentrennung (114) beabstandet sind;
Vergleichen (1206) der ersten Übertragungsleistungskapazität und der zweiten Übertragungsleistungskapazität, um zu bestimmen, welche der ersten und zweiten Übertragungsleistungskapazitäten eine geringere oder größere Übertragungsleistungskapazität aufweist; und
in Reaktion darauf, dass die erste Übertragungsleistungskapazität die geringere Übertragungsleistungskapazität aufweist oder die zweite Übertragungsleistungskapazität die größere Übertragungsleistungskapazität aufweist, Umschalten (1208) einer aktuellen oder geplanten Übertragung von der ersten Antenne (104) auf die zweite Antenne (112).

2. Verfahren nach Anspruch 1, wobei das Umschalten (1208) der aktuellen oder geplanten Übertragung von der ersten Antenne (104) auf die zweite Antenne (112) in Reaktion auf eine Leistungsdifferenz erfolgt, die zwischen der geringeren Übertragungsleistungskapazität und der größeren Übertragungsleistungskapazität größer oder gleich einem Auslöseschwellenwert ist.

3. Verfahren nach einem der vorhergehenden Ansprüche, wobei:
das Umschalten (1208) der aktuellen oder geplanten Übertragung von der ersten Antenne (104) auf die zweite Antenne (112) umfasst:
Stoppen der aktuellen oder geplanten Übertragung von der ersten Antenne (104); und
Übertragen oder Planen einer Übertragung von Signalen unter Verwendung der zweiten Antenne (112); und
das Verfahren ferner umfasst:
in Reaktion auf das Übertragen von Signalen unter Verwendung der zweiten Antenne (112), Bestimmen, dass eine dritte Übertragungsleistungskapazität der ersten Antenne (104) größer als eine vierte Übertragungsleistungskapazität der zweiten Antenne (112) ist; und
in Reaktion auf das Bestimmen, Umschalten der Übertragung von der zweiten Antenne (112) auf die erste Antenne (104).

4. Verfahren nach Anspruch 1, ferner umfassend:
Mitteln des ersten Übertragungsleistungsgrenzwerts (408-1) über die Zeitdauer (406), um einen ersten maximalen Sendeleistungspegel, MTPL, (304-1) der ersten Antenne (104) zu bestimmen, wobei das Bestimmen der ersten Übertragungsleistungskapazität auf dem ersten MTPL (304-1) basiert;
und
Mitteln des zweiten Übertragungsleistungsgrenzwerts (408-2) über die Zeitdauer (406), um einen zweiten MTPL (304-2) der zweiten Antenne (112) zu bestimmen, wobei das Bestimmen der zweiten Übertragungsleistungskapazität auf dem zweiten MTPL (304-2) basiert.

5. Verfahren nach Anspruch 4, ferner umfassend:
Empfangen einer ersten Referenzsignal-Empfangsleistung, RSRP, (502-1) der ersten Antenne (104), wobei das Bestimmen (1202) der ersten Übertragungsleistungskapazität auf der ersten RSRP (502-1) und dem ersten MTPL (304-1) basiert; und
Empfangen einer zweiten RSRP (502-2) der zweiten Antenne (112), wobei das Bestimmen (1204) der zweiten Übertragungsleistungskapazität auf der zweiten RSRP (502-2) und dem zweiten MTPL (304-2) basiert.

6. Verfahren nach einem der Ansprüche 4 oder 5, ferner umfassend:
Erfassen einer Verringerung des ersten MTPL (304-1) auf einen dritten MTPL (304-3); in Reaktion auf die erfasste Verringerung:
Reduzieren der ersten Übertragungsleistungskapazität basierend auf dem dritten MTPL (304-3) ohne Reduzieren der zweiten Übertragungsleistungskapazität; und
Reduzieren der ersten mittleren Sendeleistung (404-1) auf eine erste Kürzungsleistung (616-1), wobei die erste Kürzungsleistung (616-1) durch den dritten MTPL (304-3) begrenzt ist.

7. Verfahren nach Anspruch 6, ferner umfassend:
in Reaktion auf das Bestimmen, dass die erste Kürzungsleistung (616-1) größer als ein Mindestleistungsschwellenwert ist, Bestimmen, ob eine erste Leistungsdifferenz größer als ein Auslöseschwellenwert zum Durchführen einer Antennenumschaltung ist, wobei die erste Leistungsdifferenz durch Vergleichen der reduzierten ersten Übertragungsleistungskapazität mit der zweiten Übertragungsleistungskapazität bestimmt wird; und
in Reaktion auf das Bestimmen, dass die erste Leistungsdifferenz größer als der Auslöseschwellenwert ist, Durchführen des Umschaltens durch:
Stoppen der aktuellen oder geplanten Übertragung von der ersten Antenne (104); und
Übertragen oder Planen einer Übertragung von Signalen unter Verwendung der zweiten Antenne (112).

8. Verfahren nach einem der Ansprüche 4 oder 5, ferner umfassend:
Erfassen einer Verringerung des zweiten MTPL (304-2) auf einen vierten MTPL (304-4); in Reaktion auf die erfasste Verringerung:
Reduzieren der zweiten Übertragungsleistungskapazität basierend auf dem vierten MTPL (304-4) ohne Reduzieren der ersten Übertragungsleistungskapazität; und
Reduzieren der zweiten mittleren Sendeleistung (404-2) auf eine zweite Kürzungsleistung (616-2), wobei die zweite Kürzungsleistung (616-2) durch den vierten MTPL (304-4) begrenzt ist.

9. Verfahren nach Anspruch 8, ferner umfassend:
in Reaktion auf das Bestimmen, dass die zweite Kürzungsleistung (616-2) größer als ein Mindestleistungsschwellenwert ist, Bestimmen, ob eine zweite Leistungsdifferenz größer als ein Auslöseschwellenwert zum Durchführen einer Antennenumschaltung ist, wobei die zweite Leistungsdifferenz durch Vergleichen der reduzierten zweiten Übertragungsleistungskapazität mit der ersten Übertragungsleistungskapazität bestimmt wird; und
in Reaktion auf das Bestimmen, dass die zweite Leistungsdifferenz größer als der Auslöseschwellenwert ist, Durchführen einer zweiten Antennenumschaltung durch:
Stoppen der aktuellen oder geplanten Übertragung von der ersten Antenne (104); und
Übertragen oder Planen einer Übertragung von Signalen unter Verwendung der zweiten Antenne (112).

10. Verfahren nach Anspruch 5, ferner umfassend:
Empfangen, durch ein Modul zur räumlichen Mittelung (218) der Rechenvorrichtung, eines Leistungssteuerungspegels, PCL, (506) von einer Leistungssteuerung (220) der Rechenvorrichtung und Vergleichen des ersten MTPL (304-1) und des zweiten MTPL (304-2) mit dem PCL (506), um die erste Übertragungsleistungskapazität bzw. die zweite Übertragungsleistungskapazität zu bestimmen.

11. Verfahren nach Anspruch 10, ferner umfassend:
wenn der PCL (506) geringer als der erste MTPL (304-1) ist,
wird die erste Übertragungsleistungskapazität basierend auf dem PCL (506) bestimmt; und
wenn der erste MTPL (304-1) geringer als der PCL (506) ist,
wird die erste Übertragungsleistungskapazität basierend auf dem ersten MTPL (304-1) bestimmt.

12. Verfahren nach Anspruch 10 oder 11, ferner umfassend:
wenn der PCL (506) geringer als der zweite MTPL (304-2) ist, wird die zweite Übertragungsleistungskapazität basierend auf dem PCL (506) bestimmt; und
wenn der zweite MTPL (304-2) geringer als der PCL (506) ist, wird die zweite Übertragungsleistungskapazität basierend auf dem zweiten MTPL (304-2) bestimmt.

13. Verfahren nach einem der Ansprüche 1 bis 9, wobei:
der erste Übertragungsleistungsgrenzwert (408-1) einem ersten regulatorischen Grenzwert für die erste Antenne (104) zum Übertragen von Hochfrequenzsignalen entspricht; und
der zweite Übertragungsleistungsgrenzwert (408-2) einem zweiten regulatorischen Grenzwert für die zweite Antenne (114) zum Übertragen von Hochfrequenzsignalen entspricht.

14. Verfahren nach einem der Ansprüche 1 bis 9, ferner umfassend:
Bestimmen einer dritten Übertragungsleistungskapazität basierend auf einem dritten Übertragungsleistungsgrenzwert für eine dritte Antenne (1002) der Rechenvorrichtung (102), wobei die Rechenvorrichtung (102) ferner dazu konfiguriert ist, Signale mit einer dritten Übertragungsleistung unter Verwendung der dritten Antenne (1002) zu übertragen, wobei die dritte Übertragungsleistung durch den dritten Übertragungsleistungsgrenzwert begrenzt ist, wobei das Bestimmen der dritten Übertragungsleistungskapazität das Mitteln der dritten Übertragungsleistung über die Zeitdauer (406) umfasst, wobei die dritte Übertragungsleistungskapazität unter Verwendung der dritten Übertragungsleistung ohne Abhängigkeit von der ersten Übertragungsleistung (402-1) und der zweiten Übertragungsleistung (402-2) bestimmt wird, wenn die dritte Antenne (1002) und die erste und zweite Antenne (104, 112) um einen Abstand von mindestens der Antennentrennung (114) beabstandet sind; und
Durchführen einer Antennenumschaltung in Reaktion auf das Vergleichen der dritten Übertragungsleistungskapazität mit der ersten Übertragungsleistungskapazität oder der zweiten Übertragungsleistungskapazität.

15. Rechenvorrichtung (102), umfassend:
ein Gehäuse;
mindestens zwei Antennen (104, 112), wobei jede Antenne innerhalb des Gehäuses positioniert und dazu konfiguriert ist, Signale zu empfangen und zu übertragen;
mindestens einen Prozessor (204); und
computerlesbare Speichermedien (206), die Anweisungen umfassen, welche, wenn sie durch den Prozessor (204) ausgeführt werden, die Rechenvorrichtung (102) anweisen, ein beliebiges der in den Ansprüchen 1 bis 13 angeführten Verfahren unter Verwendung der mindestens zwei Antennen (104, 112) durchzuführen.

## Revendications

1. Procédé réalisé par un dispositif informatique (102) comprenant :
la détermination (1202) d'une première capacité de puissance de transmission sur la base d'une première limite de puissance de transmission (408-1) pour une première antenne (104) du dispositif informatique (102), le dispositif informatique (102)
étant configuré pour transmettre des signaux à une première puissance de transmission (402-1) à l'aide de la première antenne (104), la première puissance de transmission (402-1) étant limitée par la première limite de puissance de transmission (408-1), la détermination (1202) de la première capacité de puissance de transmission comprend le fait de faire la moyenne de la première puissance de transmission (402-1) sur une certaine durée (406) ;
la détermination (1204) d'une deuxième capacité de puissance de transmission sur la base d'une deuxième limite de puissance de transmission (408-2) pour une deuxième antenne (112) du dispositif informatique (102), le dispositif informatique étant également (102) configuré pour transmettre des signaux à une deuxième puissance de transmission (402-2) à l'aide de la deuxième antenne (112), la deuxième puissance de transmission (402-2) étant limitée par la deuxième limite de puissance de transmission (408-2), la détermination (1204) de la deuxième capacité de puissance de transmission comprend le fait de faire la moyenne de la deuxième puissance de transmission (402-2) sur la certaine durée (406), la deuxième capacité de puissance de transmission étant déterminée par :
l'utilisation de la deuxième puissance de transmission (402-2) et de la première puissance de transmission (402-1) lorsque la première antenne (104) et la deuxième antenne (112) sont espacées d'une distance inférieure à une séparation d'antennes (114), la séparation d'antennes (114) étant au moins une distance minimale de séparation de la première antenne (104) et de la deuxième antenne (112), et
l'utilisation de la deuxième puissance de transmission (402-2) sans dépendre de la première puissance de transmission (402-1) lorsque la première antenne (104) et la deuxième antenne (112) sont espacées d'une distance d'au moins la séparation d'antennes (114) ;
la comparaison (1206) de la première capacité de puissance de transmission et de la deuxième capacité de puissance de transmission pour déterminer laquelle des première et deuxième capacités de puissance de transmission a une capacité de puissance de transmission plus faible ou plus élevée ; et
en réponse à la première capacité de puissance de transmission ayant la capacité de puissance de transmission la plus faible ou à la deuxième capacité de puissance de transmission ayant la capacité de puissance de transmission la plus élevée, la commutation (1208) d'une transmission actuelle ou planifiée de la première antenne (104) à la deuxième antenne (112).

2. Procédé selon la revendication 1, dans lequel la commutation (1208) de la transmission actuelle ou planifiée de la première antenne (104) à la deuxième antenne (112) est effectuée en réponse à une différence de puissance entre la capacité de puissance de transmission la plus faible et la capacité de puissance de transmission la plus élevée, étant supérieure ou égale à un seuil de déclenchement.

3. Procédé selon une quelconque revendication précédente, dans lequel :
la commutation (1208) de la transmission actuelle ou planifiée de la première antenne (104) à la deuxième antenne (112) comprend :
l'interruption de la transmission actuelle ou planifiée de la première antenne (104) ; et
la transmission ou la planification de la transmission de signaux à l'aide de la deuxième antenne (112) ; et
le procédé comprend également :
en réponse à la transmission de signaux à l'aide de la deuxième antenne (112), la détermination selon laquelle une troisième capacité de puissance de transmission de la première antenne (104) est supérieure à une quatrième capacité de puissance de transmission de la deuxième antenne (112) ; et
en réponse à la détermination, la commutation de la transmission de la deuxième antenne (112) à la première antenne (104).

4. Procédé selon la revendication 1, comprenant également :
le fait de faire la moyenne de la première limite de puissance de transmission (408-1) sur la certaine durée (406) pour déterminer un premier niveau de puissance de transmission maximal, MTPL, (304-1) de la première antenne (104), dans lequel la détermination de la première capacité de puissance de transmission est basée sur le premier MTPL (304-1) ;
et
le fait de faire la moyenne de la deuxième limite de puissance de transmission (408-2) sur la certaine durée (406) pour déterminer un deuxième MTPL (304-2) de la deuxième antenne (112), dans lequel la détermination de la deuxième capacité de puissance de transmission est basée sur le deuxième MTPL (304-2).

5. Procédé selon la revendication 4, comprenant également :
la réception d'une première puissance de réception de signal de référence, RSRP, (502-1) de la première antenne (104), dans lequel la détermination (1202) de la première capacité de puissance de transmission est basée sur la première RSRP (502-1) et le premier MTPL (304-1) ; et
la réception d'une seconde RSRP (502-2) de la deuxième antenne (112), dans lequel la détermination (1204) de la deuxième capacité de puissance de transmission est basée sur la seconde RSRP (502-2) et la deuxième MTPL (304-2).

6. Procédé selon l'une quelconque des revendications 4 ou 5, comprenant également :
la détection d'une diminution du premier MTPL (304-1) à un troisième MTPL (304-3) ; en réponse à la diminution détectée :
la réduction de la première capacité de puissance de transmission sur la base du troisième MTPL (304-3) sans réduire la deuxième capacité de puissance de transmission ; et
la réduction de la première puissance de transmission moyenne (404-1) à une première puissance de réduction (616-1), la première puissance de réduction (616-1) étant limitée par le troisième MTPL (304-3).

7. Procédé selon la revendication 6, comprenant également :
en réponse à la détermination selon laquelle la première puissance de réduction (616-1) est supérieure à un seuil de puissance minimal, le fait de déterminer si une première différence de puissance est supérieure à un seuil de déclenchement pour réaliser une commutation d'antenne, la première différence de puissance étant déterminée en comparant la première capacité de puissance de transmission réduite à la deuxième capacité de puissance de transmission ; et
en réponse à la détermination selon laquelle la première différence de puissance est supérieure au seuil de déclenchement, la réalisation de la commutation en :
interrompant la transmission actuelle ou planifiée de la première antenne (104) ; et
transmettant ou planifiant la transmission de signaux à l'aide de la deuxième antenne (112).

8. Procédé selon l'une quelconque des revendications 4 ou 5, comprenant également :
la détection d'une diminution du deuxième MTPL (304-2) à un quatrième MTPL (304-4) ; en réponse à la diminution détectée :
la réduction de la deuxième capacité de puissance de transmission sur la base du quatrième MTPL (304-4) sans réduire la première capacité de puissance de transmission ; et
la réduction de la deuxième puissance de transmission moyenne (404-2) à une seconde puissance de réduction (616-2), la seconde puissance de réduction (616-2) étant limitée par le quatrième MTPL (304-4).

9. Procédé selon la revendication 8, comprenant également :
en réponse à la détermination selon laquelle la seconde puissance de réduction (616-2) est supérieure à un seuil de puissance minimal, le fait de déterminer si une seconde différence de puissance est supérieure à un seuil de déclenchement pour réaliser une commutation d'antenne, la seconde différence de puissance étant déterminée en comparant la deuxième capacité de puissance de transmission réduite à la première capacité de puissance de transmission ; et
en réponse à la détermination selon laquelle la seconde différence de puissance est supérieure au seuil de déclenchement, la réalisation d'une seconde commutation d'antenne en :
interrompant la transmission actuelle ou planifiée de la première antenne (104) ; et
transmettant ou planifiant la transmission de signaux à l'aide de la deuxième antenne (112).

10. Procédé selon la revendication 5, comprenant également :
la réception, par un module de moyenne spatiale (218) du dispositif informatique, d'un niveau de commande de puissance, PCL, (506) provenant d'une commande de puissance (220) du dispositif informatique et la comparaison du premier MTPL (304-1) et du deuxième MTPL (304-2) au PCL (506) pour déterminer la première capacité de puissance de transmission et la deuxième capacité de puissance de transmission respectivement.

11. Procédé selon la revendication 10, comprenant également :
si le PCL (506) est inférieur au premier MTPL (304-1), la première capacité de puissance de transmission est déterminée sur la base du PCL (506) ; et
si le premier MTPL (304-1) est inférieur au PCL (506),
la première capacité de puissance de transmission est déterminée sur la base du premier MTPL (304-1).

12. Procédé selon la revendication 10 ou 11, comprenant également :
si le PCL (506) est inférieur au deuxième MTPL (304-2), la deuxième capacité de puissance de transmission est déterminée sur la base du PCL (506) ; et
si le deuxième MTPL (304-2) est inférieur au PCL (506), la première capacité de puissance de transmission est déterminée sur la base du deuxième MTPL (304-2).

13. Procédé selon l'une quelconque des revendications 1 à 9, dans lequel :
la première limite de puissance de transmission (408-1) correspond à une première limite réglementaire pour la première antenne (104) pour transmettre des signaux radiofréquences ;
et
la deuxième limite de puissance de transmission (408-2) correspond à une seconde limite réglementaire pour la deuxième antenne (114) pour transmettre des signaux radiofréquences.

14. Procédé selon l'une quelconque des revendications 1 à 9, comprenant également :
la détermination d'une troisième capacité de puissance de transmission sur la base d'une troisième limite de puissance de transmission pour une troisième antenne (1002) du dispositif informatique (102), le dispositif informatique (102) étant également configuré pour transmettre des signaux à une troisième puissance de transmission à l'aide de la troisième antenne (1002), la troisième puissance de transmission étant limitée par la troisième limite de puissance de transmission, la détermination de la troisième capacité de puissance de transmission comprend le fait de faire la moyenne de la troisième puissance de transmission sur la certaine durée (406), la troisième capacité de puissance de transmission étant déterminée à l'aide de la troisième puissance de transmission sans dépendre de la première puissance de transmission (402-1) et de la deuxième puissance de transmission (402-2) lorsque la troisième antenne (1002) et les première et deuxième antennes (104, 112) sont espacées d'une distance d'au moins la séparation d'antennes (114) ; et
la réalisation d'une commutation d'antenne, en réponse à la comparaison de la troisième capacité de puissance de transmission à la première capacité de puissance de transmission ou la deuxième capacité de puissance de transmission.

15. Dispositif informatique (102), comprenant :
une enceinte ;
au moins deux antennes (104, 112), chaque antenne étant positionnée à l'intérieur de l'enceinte et configurée pour recevoir et transmettre des signaux ;
au moins un processeur (204) ; et
des supports de stockage lisibles par ordinateur (206) comprenant des instructions qui, lorsqu'elles sont exécutées par le processeur (204), indiquent au dispositif informatique (102) de réaliser un quelconque procédé selon les revendications 1 à 13 à l'aide des au moins deux antennes (104, 112).
